(19) Europäisches Patentamt

European Patent Office

Office européen des brevets

(11) **EP 1 146 665 A1**

(12) **EUROPEAN PATENT APPLICATION**
published in accordance with Art. 158(3) EPC

(43) Date of publication:
**17.10.2001 Bulletin 2001/42**

(21) Application number: **00976247.7**

(22) Date of filing: **15.11.2000**

(51) Int Cl.[7]: **H04B 7/10**, H04B 7/08,
H04B 7/26, H01Q 3/26

(86) International application number:
**PCT/JP00/08036**

(87) International publication number:
**WO 01/37448 (25.05.2001 Gazette 2001/21)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **18.11.1999 JP 32796199
17.01.2000 JP 2000008364**

(71) Applicant: **MATSUSHITA ELECTRIC INDUSTRIAL
CO., LTD.
Kadoma-shi, Osaka 571-8501 (JP)**

(72) Inventors:
• **AOYAMA, Takahisa
Yokosuka-shi, Kanagawa 239-0841 (JP)**
• **MIYA, Kazuyuki
Kawasaki-shi, Kanagawa 215-0021 (JP)**
• **MIYOSHI, Kenichi
Yokohama-shi, Kanagawa 226-0003 (JP)**

(74) Representative: **Grünecker, Kinkeldey,
Stockmair & Schwanhäusser Anwaltssozietät
Maximilianstrasse 58
80538 München (DE)**

(54) **BASE STATION DEVICE AND RADIO RECEIVING METHOD**

(57) Direction of arrival estimation sections 111 to 113 carry out direction of arrival estimation on communication terminals 120 to 122. Group generation section 115 generates a group composed of communication terminals with similar directions of arrival viewed from the base station apparatus. Group representative station selection section 116 selects one or several communication terminals from the group. Adaptive signal processing section 117 carries out adaptive signal processing on the communication terminal selected from the group and generates a reception weight for each group. This reception weight is used as the reception weight for all communication terminals that belong to each group and multiplied on the reception signal by multipliers 118 and 119. These multiplication results obtained are used for interference canceller processing and normal interference canceller processing is carried out on the communication terminals in the group.

FIG. 5

**Description**

Technical Field

The present invention relates to a base station apparatus and radio reception method used in a digital radio communication system.

Background Art

An array antenna is constructed of a plurality of antenna elements and is an antenna capable of freely setting reception directivity of each antenna element by adjusting the amplitude and phase of a signal received by each antenna element. In this case, the amplitude and phase of the reception signal are adjustable by multiplying the reception signal by a complex coefficient at a reception signal processing circuit.

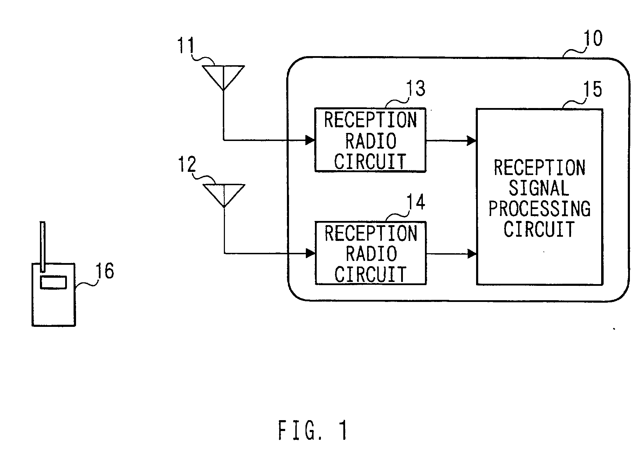

FIG.1 is a block diagram showing a configuration of a base station apparatus equipped with an array antenna. FIG.1 shows an example of base station apparatus with an array antenna constructed of two antenna elements. A normal base station apparatus is equipped with a plurality of systems of reception signal processing circuits to demodulate reception signals from a plurality of communication terminals. FIG.1 shows a base station apparatus provided with only one system of reception signal processing circuit for brevity of explanations.

When base station apparatus 10 shown in FIG. 1 enters into communication with communication terminal 16, base station apparatus 10 receives a signal from communication terminal 16 using antennas 11 and 12. The signal received by antenna 11 is down-converted to a base frequency band or intermediate frequency band by reception radio circuit 13 and output to reception signal processing circuit 15. On the other hand, the signal received by antenna 12 is down-converted to a base frequency band or intermediate frequency band by reception radio circuit 14 and output to reception signal processing circuit 15. Reception signal processing circuit 15 applies demodulation processing to the reception signals. Furthermore, reception signal processing circuit 15 adjusts a complex coefficient to be multiplied on the reception signals. This allows the array antenna to receive only electromagnetic signals arriving froma desired direction more strongly. Thus, receiving only an electromagnetic signal arriving from a desired direction strongly refers to "having reception directivity". When the base station apparatus is provided with reception directivity, it is possible to keep a high reception SIR (signal to Interference Ratio: hereinafter referred to as "SIR"). The configuration of reception signal processing circuit 15 is determined according to the communication system used. However, that the base station apparatus carries out such array antenna processing on all communication terminals involves a problem of making the amount of processing enormous.

An interference canceller is very useful means for extracting only desired signals when a CDMA (Code Division Multiple Access) system is used. This interference canceller is a technology for extracting a desired signal from a reception signal by eliminating signals (interference) from communication terminals other than the communication terminal at the other end of communication.

The interference canceller will be explained using a symbol ranking type interference canceller such as the one disclosed in the Unexamined Japanese Patent Publication No.HEI 10-126383 shown in FIG.2. First, in the interference canceller, reception signal storage section 21 stores a received signal for each channel corresponding to each communication terminal. The stored reception signals of the respective communication terminals are sent to their respective despreading sections 22 to 24, where the reception signals are despread and demodulated.

The demodulated signals are each output to channel estimation sections 25 to 27. Channel estimation sections 25 to 27 compare the demodulated signals with pilot signals, which are known signals, and obtain channel estimated values from the comparison results.

The channel estimated values obtained from channel estimation sections 25 to 27 are each output to replica generation sections 28 to 30. Replica generation sections 28 to 30 generate replica signals from the channel estimated values. Furthermore, replica generation sections 28 to 30 send the replica signals created to reception signal storage section 21 and at the same time send information on the magnitudes of the replica signals generated to ranking section 31.

Ranking section 31 ranks the communication terminals in descending order of the magnitudes of reception signals based on the magnitudes of the replica signals for each channel corresponding to each communication terminal and sends the result to reception signal storage section 21. In this case, signals corresponding to high-ranked communication terminals are directly demodulated.

Reception signal storage section 21 removes interference by high-ranked communication terminals by subtracting the replica signals ranked high by ranking section 31 from the reception signal. Reception signal storage section 21 sends the reception signals stripped of interference to despreading sections 22 to 24, carries out processing similar to the processing above to remove interference from the reception signals again. The interference canceller removes interference from the reception signal by repeating this processing.

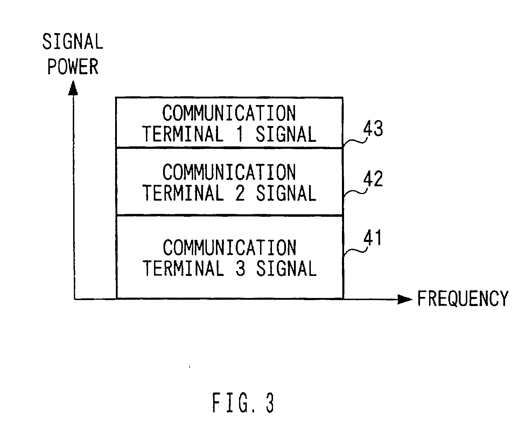

When, for example, a signal multiplexed according to a CDMA system has a configuration as shown in FIG. 3, the above-described processing first removes and demodulates signal 41 of communication terminal 3. Then, the processing removes and demodulates signal 42 of communication terminal 2. Finally, the processing demodulates signal 43 of communication terminal 1.

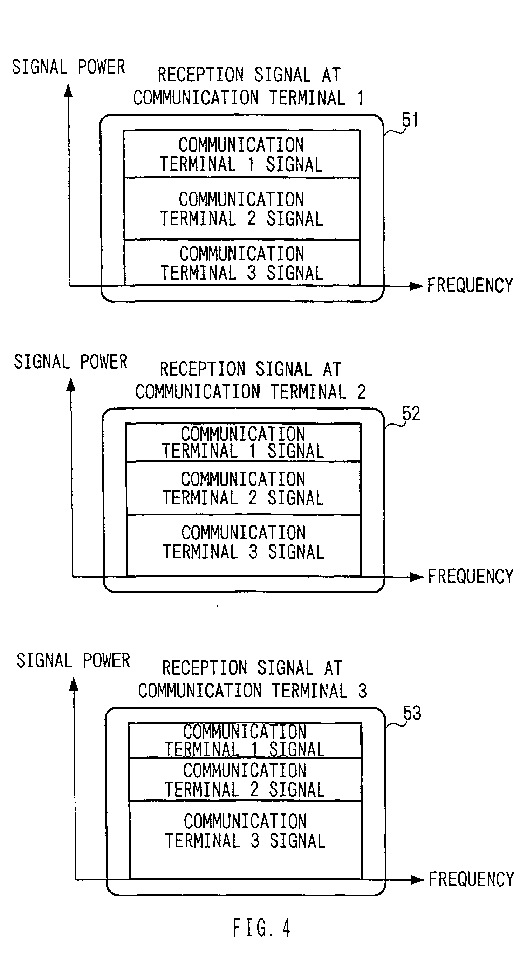

However, in a radio communication system that provides reception directivity to each channel corresponding to each communication terminal individually using an array antenna, the degree of interference with respective communication terminals varies from one communication terminal to another. That is, as shown in FIG.4, reception signal 51 at communication terminal 1, reception signal 52 at communication terminal 2, and reception signal 53 at communication terminal 3 have different orders of the magnitudes of reception signals.

For this reason, it is impossible to uniquely determine the ranking of reception signals for the base station apparatus as a whole. Thus, when the interference canceller is applied to such a system, it is necessary to individually provide an interference canceller to each channel corresponding to each communication terminal. When actual hardware design is taken into account, it is extremely difficult to realize this.

Disclosure of Invention

It is an object of the present invention to provide a base station apparatus and a radio reception method capable of reducing an amount of calculations and at the same time receiving a desired signal with high quality without providing an interference canceller for each channel corresponding to each communication terminal even in the case of combining an array antenna and interference canceller.

A subject of the present invention is to make it easier to use an interference canceller, which becomes effective means for carrying out a CDMA communication, together with array antenna processing and thereby increase the number of communication terminals accommodated by applying array antenna processing with a limited number of directivities to many communication terminals, dividing the many communication terminals into the same number of groups as directivities and providing the same directivity within each group.

Brief Description of Drawings

FIG. 1 is a block diagram showing a conventional base station apparatus;

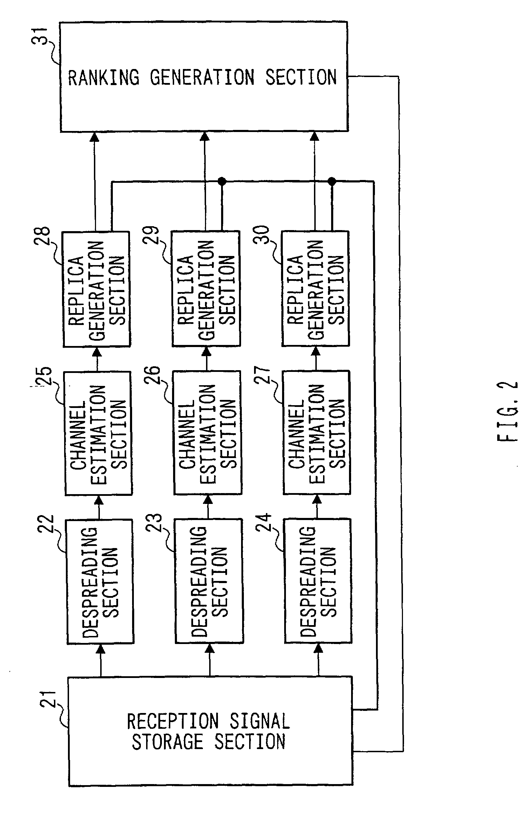

FIG.2 is a block diagram showing a configuration of an interference canceller;

FIG.3 is a conceptual diagram showing a signal multiplexed according to a CDMA system;

FIG.4 is a conceptual diagram showing that a signal multiplexed according to a CDMA system varies from one communication terminal to another when array antenna processing is applied to communication terminals;

FIG.5 is a block diagram showing a configuration of a base station apparatus according to Embodiment 1 of the present invention;

FIG.6 is a conceptual diagram to explain grouping by the base station apparatus according to Embodiment 1 of the present invention;

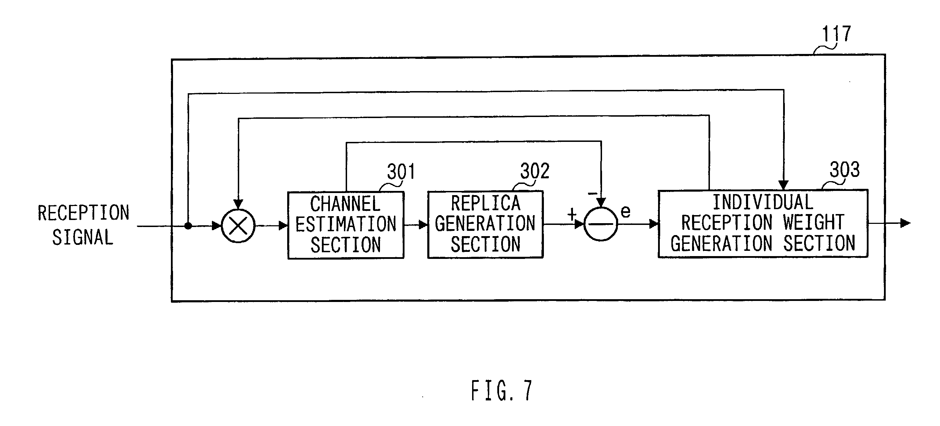

FIG.7 is a block diagram showing an internal configuration of an adaptive signal processing circuit of the base station apparatus according to Embodiment 1 of the present invention;

FIG.8 is a block diagram showing a configuration of a base station apparatus according to Embodiment 2 of the present invention;

FIG.9 is a conceptual diagram to explain grouping by the base station apparatus according to Embodiment 2 of the present invention;

FIG.10 is a conceptual diagram showing directivity patterns saved in a directivity pattern saving circuit of the base station apparatus according to Embodiment 2 of the present invention;

FIG.11 is a conceptual diagram showing directivity patterns saved in the directivity pattern saving circuit of the base station apparatus according to Embodiment 2 of the present invention;

FIG.12 is a block diagram showing a configuration of a base station apparatus according to Embodiment 3 of the present invention;

FIG.13 is a drawing showing a concept of channel estimation carried out by the base station apparatus according to Embodiment 3 of the present invention;

FIG.14 is a drawing showing directivity patterns of communication terminals in communication with the base station apparatus according to Embodiment 3 of the present invention;

FIG.15 is a conceptual diagram to explain grouping by the base station apparatus according to Embodiment 3 of the present invention;

FIG.16 is a block diagram showing a configuration of a base station apparatus according to Embodiment 4 of the present invention;

FIG.17 is a block diagram showing a configuration of a base station apparatus according to Embodiment 5 of the present invention;

FIG.18 is a block diagram showing a configuration of a base station apparatus according to Embodiment 6 of the present invention;

FIG.19 is a block diagram showing a configuration of a base station apparatus according to Embodiment 7 of the present invention;

FIG.20 is a block diagram showing a configuration of a base station apparatus according to Embodiment 8 of the present invention; and

FIG.21 is a block diagram showing a configuration of a base station apparatus according to Embodiment 9 of the present invention.

Best Mode for Carrying out the Invention

With reference now to the attached drawings, embodiments of the present invention will be explained in detail below.

(Embodiment 1)

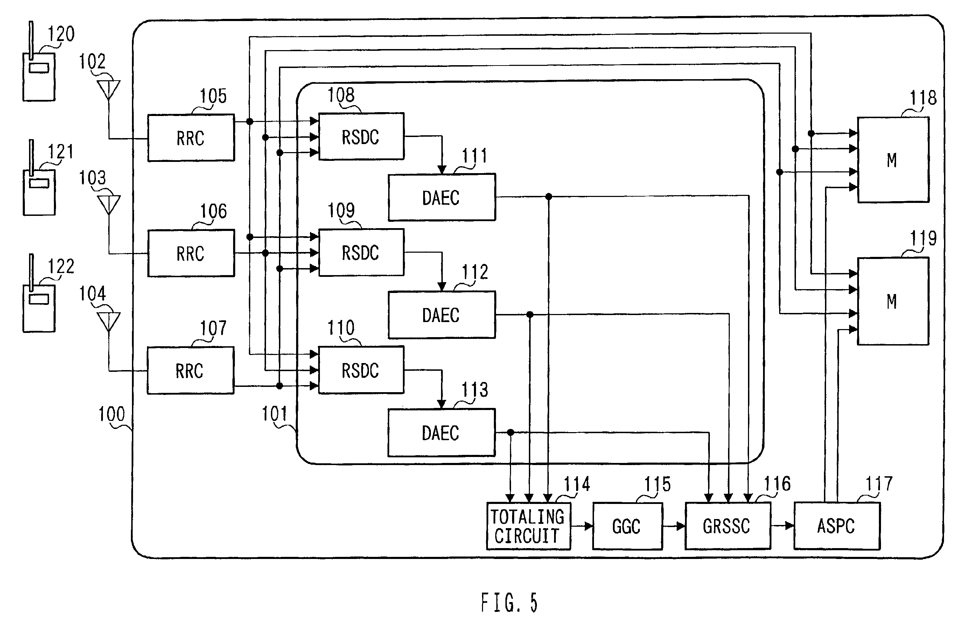

FIG.5 is a block diagram showing a configuration of a base station apparatus according to Embodiment 1 of the present invention. Here, a case where the base station apparatus carries out radio communication with communication terminals 120 to 122 will be explained.

Reception radio circuits 105 to 107 apply predetermined radio reception processing (down-conversion, A/D conversion, etc.) to radio signals received via antennas 102 to 104, respectively. Since the base station apparatus of this embodiment is provided with an array antenna reception function using three antennas, there are three antennas and three reception radio circuits.

The baseband signals processed in their respective reception radio circuits 105 to 107 are sent to baseband signal processing circuit 101. A base station apparatus is normally provided with a plurality of systems of baseband signal processing circuits to demodulate reception signals from a plurality of communication terminals. For brevity's sake, this embodiment assumes that there are three communication terminals and baseband signal processing circuit 101 is provided with three processing systems accordingly.

Reception signal demodulation circuits 108 to 110 carry out baseband processing such as CDMA demodulation on the reception signals of communication terminal apparatuses 120 to 122. Direction of arrival estimation circuits 111 to 113 each carry out adaptive signal processing on the reception signals from communication terminal apparatuses 120 to 122, obtain the directions of arrival of signals from the respective communication terminals and detect the directions of arrival of signals from the respective communication terminals.

Totaling circuit 114 totalizes the direction of arrival information pieces from communication terminal apparatuses 120 to 122, which are the outputs from direction of arrival estimation circuits 111 to 113. Group generation circuit 115 groups the communication terminals based on the totalized direction of arrival information. Group representative station selection circuit 116 selects a communication terminal to be the representative of each group generated by group generation circuit 115.

Adaptive signal processing circuit 117 carries out adaptive signal processing on the signal of the communication terminal selected as the representative of the group by group representative station selection circuit 116 and regards the directivity obtained as the directivity of each group. Multipliers 118 and 119 each multiply the reception signals received by reception antennas 102 to 104, then demodulated into baseband signals by reception radio circuits 105 to 107 by a reception weight, which becomes the directivity for the group generated by adaptive signal processing circuit 117. Here, two multipliers exist based on the assumption that two groups are generated.

Next, the operation of the base station apparatus configured as shown above will be explained.

The signals sent from communication terminals 120 to 122 are received by reception radio circuits 105 to 107 via antennas 102 to 104, respectively, where the reception signals are subjected to radio reception processing. The reception signals subjected to this radio reception processing are sent to multipliers 118 and 119 and at the same time sent to reception signal demodulation circuits 108 to 110. Reception signal demodulation circuits 108 to 110 each carry out CDMA demodulation, etc. on the signals received from reception radio circuits 105 to 107 corresponding to communication terminals 120 to 122, respectively and send to direction of arrival estimation circuits 111 to 113. Direction of arrival estimation circuits 111 to 113 carry out direction of arrival estimation processing on the reception signals.

There are various direction of arrival estimation methods such as a beam former method using FFT (Fast Fourier Transform), linear prediction method and minimum norm method, etc., but the present invention is not limited to a particular method. Then, the results of direction of arrival estimations carried out by direction of arrival estimation circuits 111 to 113 are output to totaling circuit 114.

Totaling circuit 114 determines the directions of arrival of the signals from communication terminals 120 to 122 by totaling the results of direction of arrival estimations. Totaling circuit 114 carries out totaling taking into account the correspondence between each communication terminal and the angle of direction of arrival (angle relative to the antenna frontal direction).

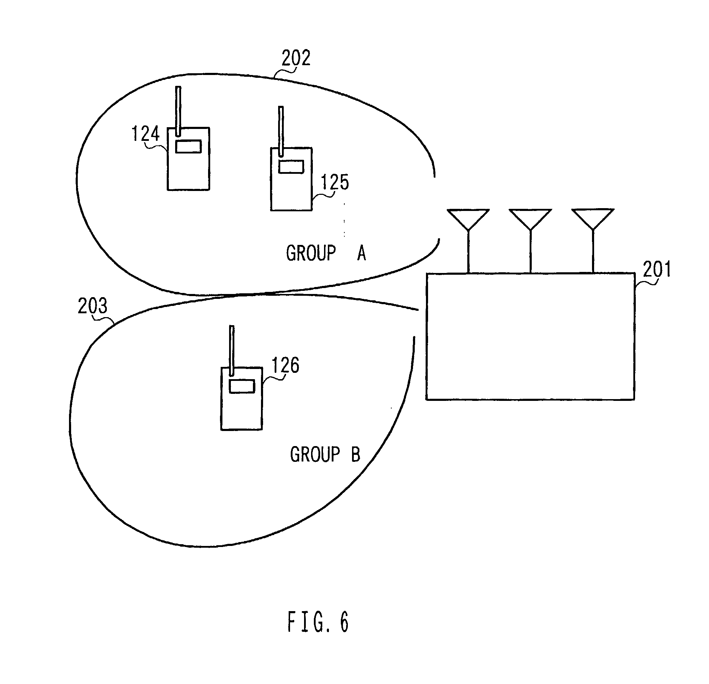

Totaling circuit 114 outputs the information of the directions of arrival of the signals from communication terminals 120 to 122 to group generation circuit 115. Group generation circuit 115 creates groups including the communication terminals. That is, group generation circuit 115 divides the directions of arrival of the signals from the communication terminals into at least two directivity groups. Here, suppose the case where communication terminals 120 to 122 are divided into two groups as shown in FIG.6.

More specifically, group generation circuit 115 generates groups as follows. Group generation circuit 115 receives totaling information made up of the communication terminals associated with the angles of directions of arrival from totaling circuit 114. Group generation circuit 115 creates groups by setting the angle range of each group based on the totaling information so that communication terminals are uniformly distributed to groups. In this case, since the number of groups is predetermined, if the number of communication terminals is known, it is possible to generate groups. Thus, in the direction in which arriving signals from communication terminals are densely located, the angle range set for the group is narrow, while in the direction in which arriving signals from communication terminals are sparsely located, the angle range set for the group is wide.

Furthermore, it is also possible to create groups taking into account not only the number of communication terminals as described above but also power of reception signals from the communication terminals at the base station and measuring the reception signals from the communication terminals in such a way that each group has equal reception power. In this case, it is also possible to adopt a method that takes into account only communication terminals that have been judged to have at least a predetermined level of power at the base station instead of taking into account all communication terminals.

Furthermore, if such cases are taken into account where a signal from one communication terminal arrives from a plurality of directions due to reflections, etc., signals can be distinguished by the direction of arrival. Using this, it is also possible to create groups so that each group has an equal number of arriving signals instead of control by communication terminal. In this case, taking into account not only the number of arriving signals as described above, but also signal power of each arriving signal at the base station, it is possible to create groups so that the sum total of signal power of arriving signals in each group is equal.

Moreover, it is also possible to select at least one of existing communication terminals with large reception power at the base station and create groups centered on the selected communication terminal. In this case, it is necessary to check that the signals from the selected communication terminals are not from the same direction of arrival.

Creating groups in this way makes it possible to use a same reception weight in a same group. This eliminates the need to create a reception weight for every communication terminal, allowing a drastic reduction in the amount of calculations.

Furthermore, when creating groups, it is also possible to create groups so as to cover the entire cell or sector of the base station. In this case, even if a new communication terminal is added, it is possible to know to which group the new communication terminal belongs by estimating the position of the communication terminal from its direction of arrival, and so it is possible to use the originally used reception weight from the beginning of the communication in the group to which the communication terminal belongs.

More specifically, group generation in the present invention will be explained using FIG.6. As is apparent from FIG.6, through group generation circuit 115, base station apparatus 201 generates groups (directivities) in such a way that group A 202 includes communication terminals 120 and 121 and group B 203 includes communication terminal 126. Group generation circuit 115 sends the group generation result ( group angle setting range and communication terminals included in the group) to group representative station selection circuit 116. Group representative station selection circuit 116 selects one representative station from each group. More specifically, there can be various ways for group representative station selection circuit 116 to select a representative station; selecting a communication terminal included in the group with high reception power (level) as a representative station or selecting a mobile station located in the center of the group as a representative station. In the example shown in FIG.6, communication terminal 120 is selected from group A 202 as a representative station and communication terminal 122 is selected from group B 203 as a representative station. The information of a representative station and reception signal of each group is sent to adaptive signal processing circuit 117.

Adaptive signal processing circuit 117 carries out adaptive signal processing on the reception signal of the representative station of each group and generates a reception weight corresponding to each group. In this way, a reception directivity corresponding to each group is formed. In the case shown in FIG.6, the representative station of group A 202 is communication terminal 120 and the representative station of group B 203 is communication terminal 122, and so adaptive signal processing circuit 117 carries out adaptive signal processing on the reception signals of communication terminals 120 and 122. Here, the adaptive signal processing is carried out using an algorithm such as LMS (Least Mean Square) and RLS (Recursive Least Squares).

More specifically, adaptive signal processing circuit 117 sends a reception signal to channel estimation section 301, where channel estimation is carried out using a pilot part, which is a known signal to estimate the condition of the transmission path. This estimated value is sent to replica generation section 302. The reception signal is multiplied by a reception weight generated by individual reception weight generation section 303 and then sent to channel estimation section 301. In the case where no reception weight has been generated yet, a non-directive weight or fixed weight is multiplied.

Replica generation section 302 generates a signal replica that would be received through the estimated transmission path using the estimated value above. Then, replica generation section 302 compares this replica with the known signal and sends an error signal thereof to individual reception weight generation section 303.

Individual reception weight generation section 303 generates a reception weight using the error signal. At this time, the reception weight is generated using expression (1) below. Individual reception weight generation section 303 multiplies the reception signal by this reception weight, carries out the same processing as that described above on this multiplied reception signal and sends the error signal to individual reception weight generation section 303. Then, individual reception weight generation section 303 generates a reception weight using the error signal. Individual reception weight generation section 303 repeats this processing and makes the error signal converge using, for example, an LMS algorithm. The converged reception weight is output.

$$W_{m+1}=W_m + uE [X_m e^*m] \qquad \text{Expression (1)}$$

where, W: weight value, u: forgetful coefficient, X: reception signal, e: error signal

The reception weights obtained by adaptive signal processing circuit 117 from the respective groups are sent to multipliers 118 and 119. Multipliers 118 and 119 multiply the reception signals by a reception weight of each group. In this way, reception signals with the respective reception directivities of group A 202 and group B203. Here, when multiplier 118 multiplies a reception weight corresponding to group A and multiplier 119 multiplies a reception weight corresponding to group B, communication terminals 120 and 121 use the reception signal created at multiplier 118 and communication terminal 122 uses the reception signal created at multiplier 119, and thereby it is possible to carry out communication using reception weights desirable to the respective communication terminals.

The base station apparatus according to the embodiment above generates groups for a plurality of communication terminals, divides the communication terminals into groups, forms reception directivities for the respective groups and applies the reception directivity corresponding to the group to all communication terminals that belong to the group. In this case, since reception directivity is formed for every group that includes a plurality of communication terminals instead of forming reception directivity for each cannel corresponding to each communication terminal, even if there are many communication terminals, it is possible to perform array antenna reception for all communication terminals with a reduced amount of calculations. Therefore, it is possible to receive signals with a high SIR (Signal to Interference Ratio) for all communication terminals.

The embodiment above describes the case where adaptive signal processing is applied to the communication terminal of one representative station for each group and a reception weight is generated, but it is also possible in the present invention to select a plurality of communication terminals for each group, apply adaptive signal processing to the selected plurality of communication terminals and determine an optimal reception weight from among the reception weights generated by the plurality of communication terminals at any time.

This makes it possible to further improve the reception accuracy. Furthermore, by selecting a plurality of communication terminals, it is possible to continue control even if a communication terminal subject to adaptive signal processing moves or after the communication terminal terminates communication.

(Embodiment 2)

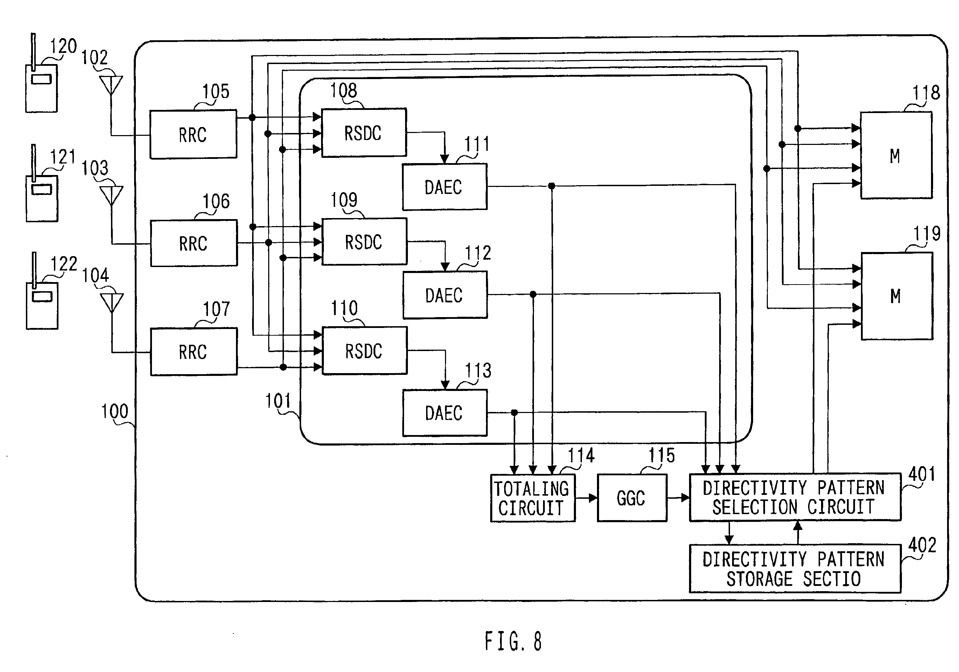

FIG.8 is a block diagram showing a configuration of a base station apparatus according to Embodiment 2 of the present invention. In FIG.8, the same parts as those in FIG.5 are assigned the same reference numerals as those in FIG.5 and detailed explanations thereof will be omitted.

In the base station apparatus shown in FIG.8, directivity pattern storage section 402 is the section to store a plurality of directivity patterns beforehand. Directivity pattern selection section 401 selects a directivity pattern apparently most suitable to be used currently from directivity pattern storage section 402 based on the group configuration generated at group generation circuit 115 and assigns the selected directivity patterns to the respective groups. Multipliers 118 and 119 each multiply the reception signals from communication terminals 120 to 122 by a reception weight of the group to which each communication terminal belongs from among the directivity patterns of the respective groups selected by directivity pattern selection circuit 401.

Then, the operation of the base station apparatus configured as shown above will be explained.

The operation up to estimating the direction of arrival of the signals from communication terminals 120 to 122 is the same as that of Embodiment 1. The estimation results of the directions of arrival of direction of arrival estimation circuits 111 to 113 are sent to totaling circuit 114. Totaling circuit 114 totalizes the direction of arrival estimation results and thereby grasps the directions of arrival from communication terminals 120 to 122. Totaling circuit 114 totalizes taking into account the communication terminals in association with the angles of the directions of arrival (angles relative to the antenna frontal direction).

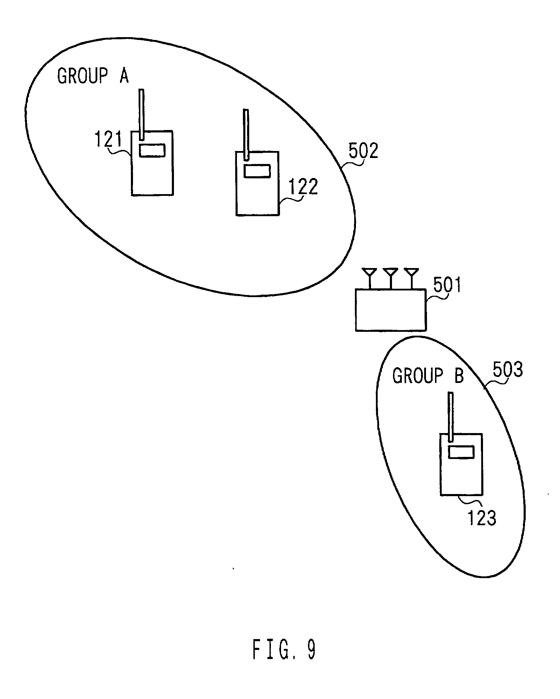

Totaling circuit 114 outputs the information of the directions of arrival from communication terminals 120 to 122 to group generation circuit 115. Group generation circuit 115 generates groups including communication terminals. That is, the directions of arrival of signals from communication terminals are divided into at least 2 directivity groups. Here, three antennas are used and it is possible to generate at least 2 groups, and therefore communication terminals 120 to 122 are divided into two groups as shown in FIG.9.

More specifically, group generation circuit 115 generates groups as follows. Group generation circuit 115 receives totaling information on the communication terminals in association with the angles of the directions of arrival. Group generation circuit 115 sets the angle ranges of groups based on the totaling information so that communication terminals are uniformly distributed to groups and generates groups. In this case, since the number of groups is preset, it is possible to generate groups if the number of communication terminals is known. Thus, in the direction in which arriving signals from communication terminals are densely located, the angle range set for the group is narrow, while in the direction in which arriving signals from communication terminals are sparsely located, the angle range set for the group is wide.

As is apparent from FIG.9, through group generation circuit 115, base station apparatus 501 generates groups (directivities) in such a way that group A 502 includes communication terminals 120 and 121 and group B 503 includes communication terminal 122. Group generation circuit 115 sends the group generation result (group angle setting range and communication terminals included in the group) to directivity pattern selection circuit 401.

Directivity pattern selection circuit 401 selects directivity patterns suited to the respective groups from directivity pattern storage section 402 based on the directions and angle setting ranges of group A 502 and group B 503. Directivity pattern storage section 402 stores reception weights corresponding to directivity patterns.

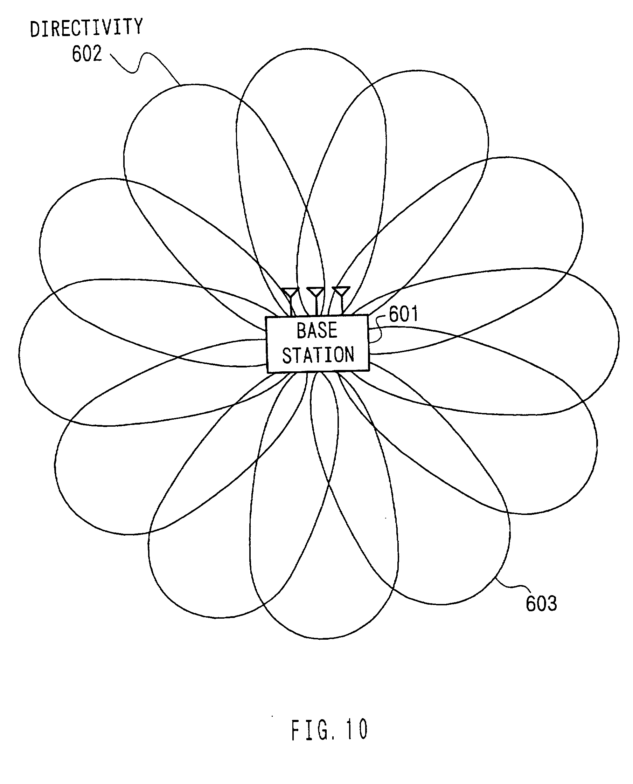

For example, if directivity pattern storage section 402 stores directivity patterns as shown in FIG.10, when groups are generated as shown in FIG.9, group A 502 is assigned directivity pattern 602 in FIG.10, while group B 503 is assigned directivity pattern 603 in FIG.10. Furthermore, directivity pattern selection circuit 401 sends a reception weight of each selected group to multipliers 118 and 119. Multipliers 118 and 119 multiply the reception signals by the reception weight of each group. Thus, reception signals having the respective directivities of group A 502 and group B 503 are obtained. This reception directivity of each group is applied to all communication terminals that belong to the group.

The base station apparatus according to the embodiment above generates groups for a plurality of communication terminals, divides the communication terminals into groups, forms reception directivities for the respective groups and applies the reception directivity corresponding to the group to all communication terminals that belong to the group . In this case, since reception directivity is formed for every group that includes a plurality of communication terminals instead of forming reception directivity for each cannel corresponding to each communication terminal, even if there are many communication terminals, it is possible to perform array antenna reception for all communication terminals with a reduced amount of calculations. Therefore, it is possible to receive signals with a high SIR for all communication terminals.

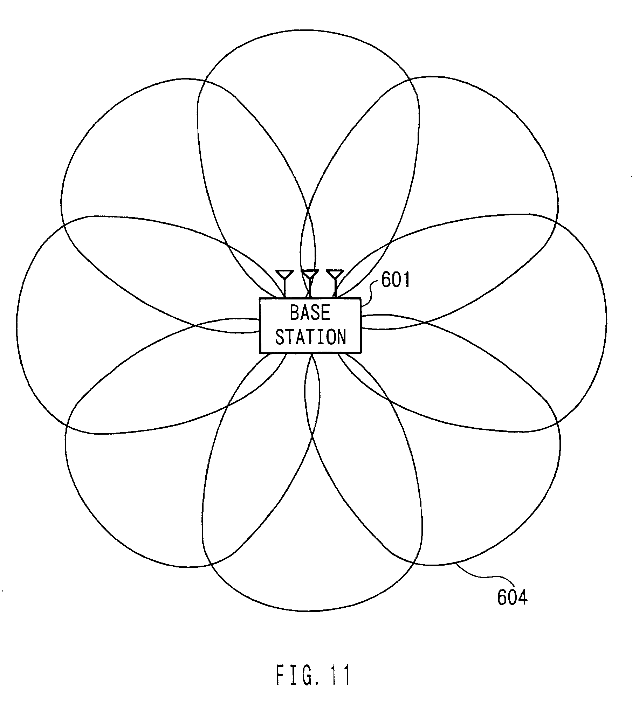

Furthermore, the embodiment above describes the case where the directivity patterns shown in FIG.10 are used, but it is also possible in the present invention to store and select, for example, as shown in FIG.11, directivity patterns with angle setting ranges different from the directivity patterns shown in FIG.10 as appropriate. This makes it possible to adaptively assign optimal directivity patterns to a group according to the number of communication terminals included in the group and-groupconfiguration. In FIG.10 and FIG.11, reference numeral 601 denotes the base station apparatus.

(Embodiment 3)

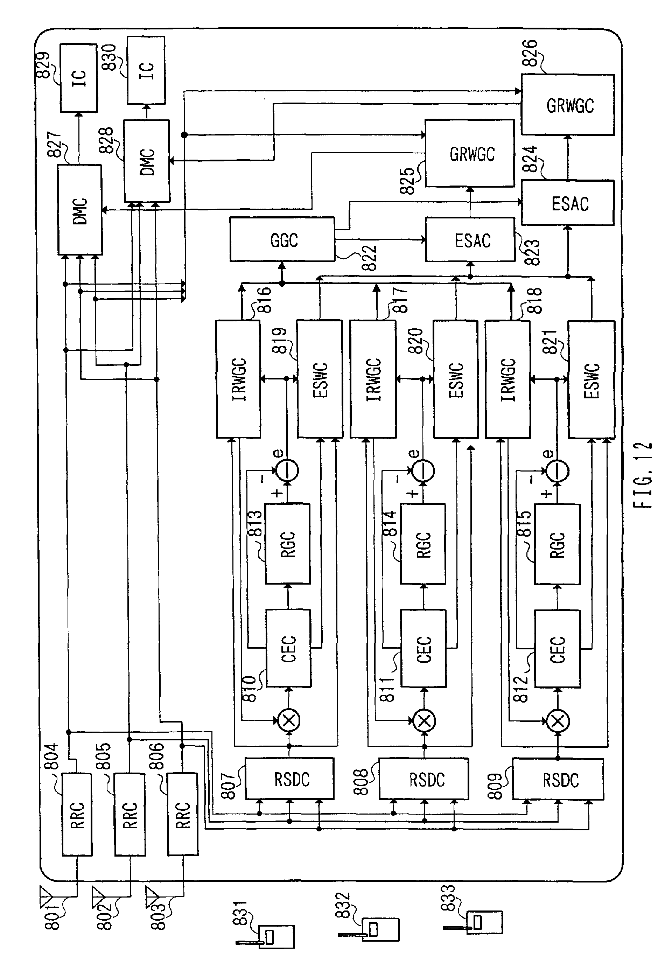

FIG.12 is a block diagram showing a configuration of a base station apparatus according to Embodiment 3 of the present invention. Here, a case where the base station apparatus carries out radio communication with communication terminals 831 to 833 will be explained.

Reception radio circuits 804 to 806 carry out predetermined radio reception processing (down-conversion, A/D conversion, etc.) on radio signals received via antennas 801 to 803, respectively. Since the base station apparatus of this embodiment is provided with an array antenna reception function using three antennas, there are three antennas and three reception radio circuits.

Reception signal demodulation circuits 807 to 809 perform baseband processing such as CDMA demodulation on the reception signals of communication terminals 831 to 833. Channel estimation circuits 810 to 812 each perform channel estimations on the reception signals from communication terminals 831 to 833 using a pilot part, which is a known signal.

Replica generation sections 813 to 815 perform provisional data judgment based on the channel estimation results output from channel estimation circuits 810 to 812 and generate replicas based on the provisional data judgment results.

Individual reception weight generation circuits 816 to 818 each receive an error signal obtained by subtracting the replica generated in replica generation circuits 813 to 815 from a signal obtained by multiplying each signal actually received by a weight, and the reception signal, and perform adaptive signal processing using this error signal and reception signal, generate a reception weight for each channel corresponding to each communication terminal and update.

Error signal weighting circuits 819 to 821 receives error signals, reception signals and channel estimation results, and assign weights to the error signals based on these inputs. Group generation circuit 822 estimates the position of each communication terminal based on the reception weights generated by individual reception weight generation sections 816 to 818 and generates groups based on the results.

Error signal averaging circuits 823 and 824 each average error signals weighted with channel estimated values of the communication terminals that belong to their respective groups based on the group configuration information generated by group generation circuit 822. Here, weighting with channel estimated values need not be performed.

Group-specific reception weight generation circuits 825 and 826 each generate reception weights used for the respective groups based on the averaging error signals generated by error signal averaging circuits 823 and 824. Here, group-specific reception weight generation circuits 825 and 826 have received the signals received from the antennas, and therefore these signals can also be used for adaptive signal processing.

Directivity multiplication circuits 827 and 828 provide the reception signals with directivities by multiplying the signals from reception radio circuits 804 to 806 by the reception weights generated by the respective group-specific reception weight generation circuits.

Interference cancellers 829 and 830 perform interference canceling processing on the reception signals provided with directivities by the respective directivity multiplication circuits 827 and 828.

By the way, the base station apparatus according to this embodiment is assumed to generate two groups using three antennas, and so each group is expressed with two systems.

Next, the operation of the base station apparatus configured as shown above will be explained.

Here, a case where the base station apparatus carries out radio communication with communication terminals 831 to 833 will be explained. Signals from communication terminals 831 to 833 are received by reception radio circuits 804 to 806 via antennas 801 to 803 and subjected there to predetermined radio reception processing (down-conversion, A/D conversion, etc.). Here, the baseband signal processing on communication terminal 831 will be explained and explanations of the baseband signal processing on communication terminals 832 and 833, which is similar baseband signal processing will be omitted.

First, reception signal demodulation circuit 807 carries out processing such as despreading processing on the signals received by reception radio circuits 804 to 806 and demodulates the signals. This demodulated signal is sent directly to individual reception weight generation circuit 816 and error signal weighting circuit 819. Furthermore, the demodulated signal is multiplied by the reception weight generated by individual reception weight generation circuit 816 and sent to channel estimation circuit 810. In this case, if no reception weight has been generated yet, a non-directive weight value is multiplied on the demodulated signal.

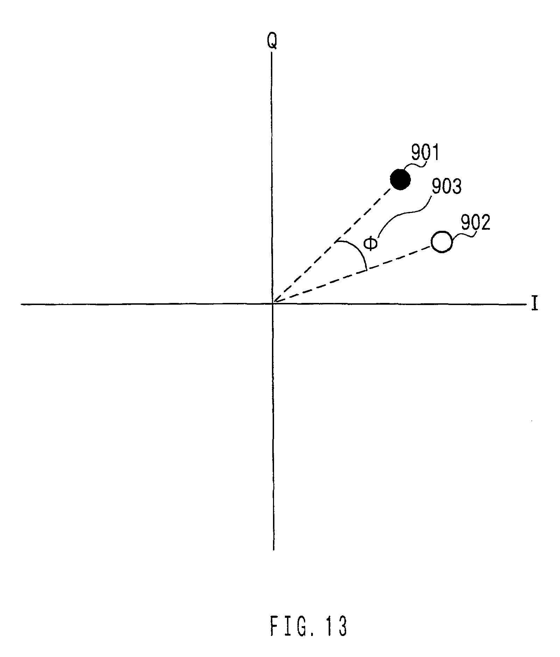

As shown in FIG.13, channel estimation circuit 810 calculates an amount of phase rotation Ø 903 of actually input signal 902 from pilot signal 901, which is a known signal, and calculates a channel estimated value. With respect to a data signal, channel estimation circuit 810 carries out phase rotation compensation by multiplying the data signal by the channel estimated value obtained, makes a provisional decision based on the result and transfers the result to replica generation circuit 813. Moreover, channel estimation circuit 810 sends the channel estimation result to error signal weighting circuit 819.

Replica generation circuit 813 generates a replica based on the provisional decision result. The replica signal generated is subtracted from the reception signal, which has been multiplied by the reception weight and used to generate an error signal for each communication terminal. The error signal generated and the reception signal, which has not been multiplied by a reception weight, are sent to individual reception weight generation circuit 818 and error signal weighting circuit 819.

Individual reception weight generation circuit 816 performs adaptive signal processing using an LMS algorithm, RLS algorithm, etc. based on the reception signal and error signal entered, generates a reception weight for each communication terminal and sends the result to group generation circuit 822. When the LMS algorithm is used, aforementioned expression (1) is used.

The processing so far is the same as the processing in adaptive signal processing circuit 117 in Embodiment 1.

Error signal weighting circuit 819 assigns a weight to the error signal entered using the channel estimated value. Error weighting circuit 819 sends the error signal weighted with the channel estimated value to error signal averaging circuit 823.

The operation above is performed for the baseband signal processing sections corresponding to the respective communication terminals independently of one another.

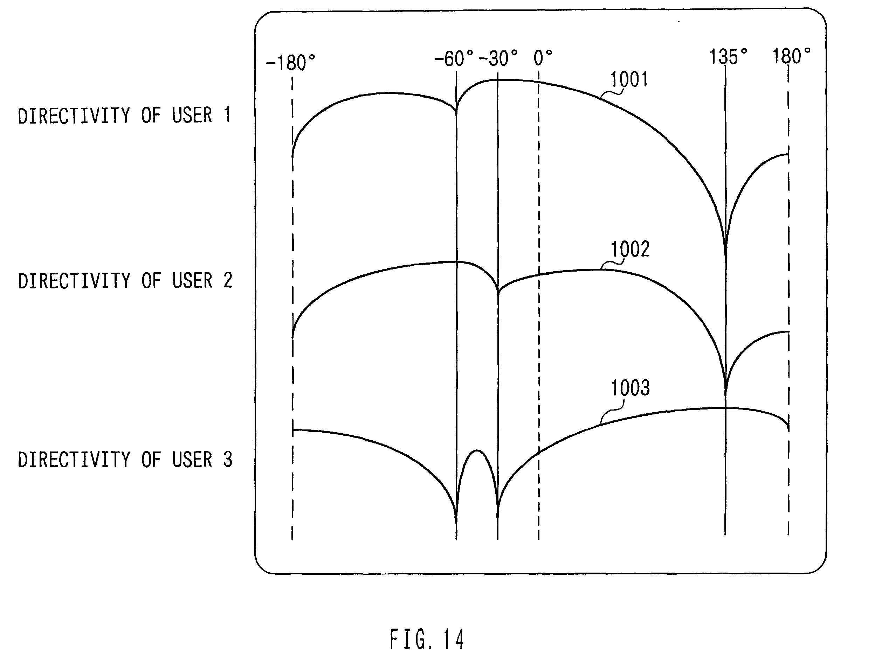

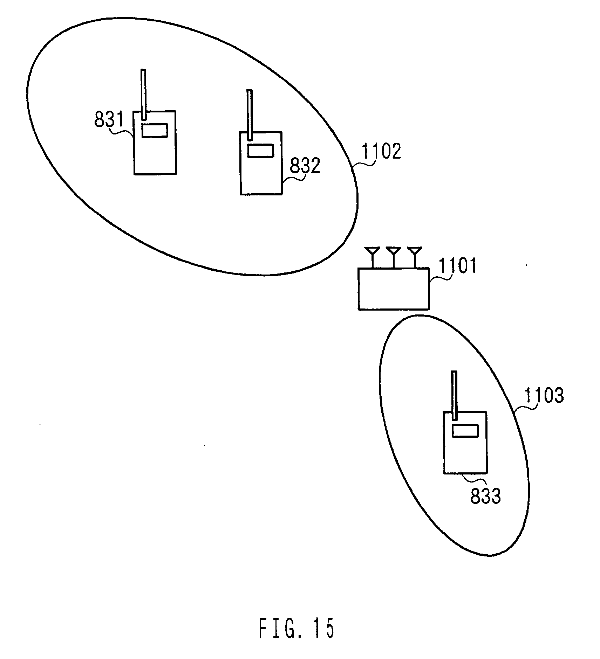

Group generation circuit 822 receives weight information of each communication terminal from individual reception weight generation circuits 816 to 818, estimates the direction in which the arriving signal from each communication terminal exists based on the reception weight and generates groups from this estimation result. This group generation will be explained using FIG.14 and FIG.15.

As shown in FIG.14, when directivities of communication terminals 831 to 833 are indicated by directivities 1001 to 1003, respectively, the arriving signals from communication terminals 831 to 833 are estimated to exist in directions -30°, -60° and 135° respectively. At this time, as shown in FIG.15, group A 1102 including communication terminals 831 and 832 located near is generated and group B 1103 including communication terminals 833 is generated. The information of group A 1102 generated in this way is sent to error signal averaging circuit 823 and the information of group B 1103 generated is sent to error signal averaging circuit 824. By the way, the angle setting range of each group is set in the same way as in Embodiment 1.

Error signal averaging circuits 823 and 824 each average the error signals weighted corresponding to the communication terminals that exist in group A and group B and send the averaging results to group-specific reception weight generation circuits 825 and 826, respectively. Group-specific reception weight generation circuits 825 and 826 perform adaptive signal processing using an LMS algorithm or RLS algorithm, etc. based on the averaged error signals entered, generate a reception weight for each group and send the reception weights to directivity multiplication circuit 827 to generate directivities for group A and directivity multiplication circuit 828 to generate directivities for group B, respectively. The processing when the LMS algorithm is used will be performed using expression (2) below.

$$W_{m+1} = W_m + u E \left[ \sum_{k-1}^{k} (X_{m,k} \, e^{n}_{m,k} \, \xi) \right] \cdots \quad \text{式}(2)$$

<div align="right">Expression (2)</div>

where, W: group weight value, u: forgetful coefficient, X: reception signal, e: error signal, $\xi$ : channel estimated value, K: number of communication terminals in group.

Directivity multiplication circuits 827 and 828 each multiply the signals received by reception radio circuits 804 to 806 by directivities of group A and group B respectively and generate signals with group-specific directivities. The signals generated are sent to interference cancellers 829 and 830, respectively. Interference cancellers 829 and 830 each carry out interference canceller processing independently of each other.

The base station apparatus according to the embodiment above generates groups for a plurality of communication terminals, divides the communication terminals into groups, forms a reception directivity for each group and applies the group-specific reception directivity to all communication terminals that belong to the group. In this case, since reception directivity is formed not for each channel corresponding to each communication terminal but for each group that contains a plurality of communication terminals, it is possible to perform array antenna reception for all communication terminals even if there are many communication terminals. Thus, it is possible to receive signals with a high SIR (Signal to Interference Ratio) from all communication terminals.

This configuration makes it possible to use a reception weight specific to each communication terminal and form a group based on the information obtained from the reception weight. Thus, when a transmission weight is used for each communication terminal on the downlink, it is possible to generate a transmission weight using a reception weight specific to each communication terminal.

Furthermore, since this base station apparatus multiplies a same reception weight for communication terminals included in each group, the magnitude of signal power of communication terminals included in the group is uniquely determined. This allows interference canceller processing to be carried out to communication terminals included in this group all together. This eliminates the need to provide an interference canceller for each channel corresponding to each communication terminal and makes it possible to carry out interference canceller processing efficiently with reduced hardware. Thus, it is possible to use an interference canceller, which is effective means when CDMA communication is carried out together with array antenna processing and increase the number of communication terminals accommodated by providing excellent interference elimination capability.

(Embodiment 4)

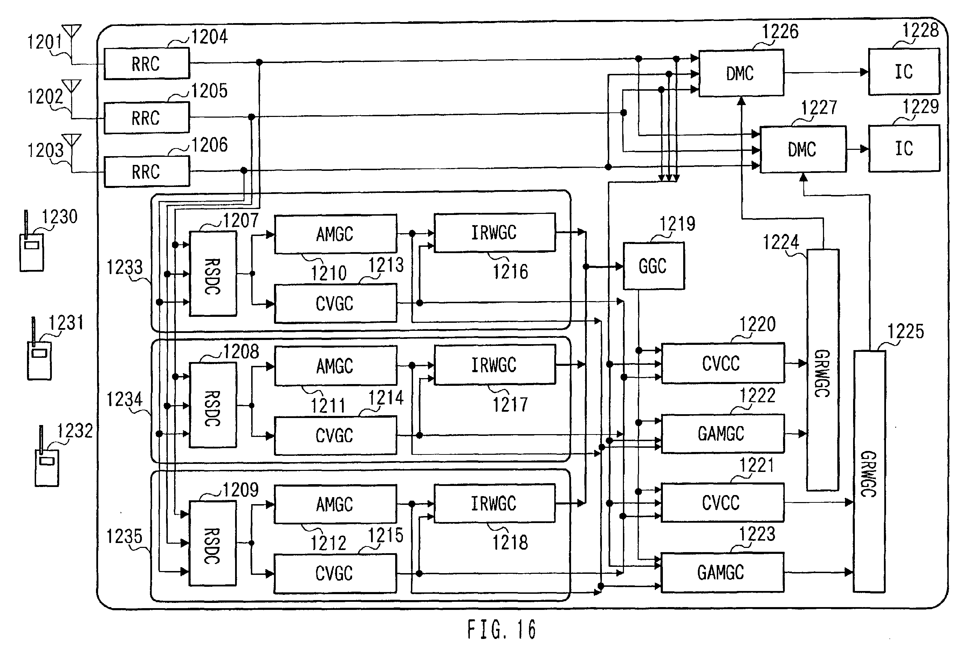

FIG.16 is a block diagram showing a configuration of a base station apparatus according to Embodiment 4 of the present invention. Reception radio circuits 1204 to 1206 demodulate signals received by antenna 1201 to 1203 into baseband signals, respectively. Since the base station apparatus of this embodiment is provided with an array antenna reception function using three antennas, there are three antenna sections and three reception radio circuits.

Reception signal demodulation circuits 1207 to 1209 perform baseband processing such as CDMA demodulation on the reception signals of communication terminals 1230 to 1232. Autocorrelation matrix generation circuits 1210 to 1212 obtain autocorrelation functions from the reception signals of communication terminals 1230 to 1232 respectively.

Correlation vector generation circuits 1213 to 1215 obtain cross-correlation vectors between the reception signals and reference signals when pilot signals (known signals) are used as reference signals from communication terminals 1230 to 1232.

Individual weight generation circuits 1216 to 1218 calculate and generate individual reception weights from autocorrelation matrices input from autocorrelation matrix generation circuits 1210 to 1212 and cross-correlation vectors input from correlation vector generation circuits 1213 to 1215.

Group generation circuit 1219 estimates the position of each communication terminal based on the reception weight generated from individual reception weight generation circuits 1216 to 1218 and generates groups based on the result. Correlation vector composition circuits 1220 and 1221 compose correlation vectors of the communication terminals that belong to the respective groups based on the group information such as the group configuration generated by group generation circuit 1219.

Group-specific autocorrelation matrix generation circuits 1222 and 1223 recognize the communication terminals that belong to the respective groups based on the group information generated by group generation circuit 1219 and generate autocorrelation matrices used to generate group-specific reception weights using the autocorrelation matrices of the communication terminals that belong to the respective groups. Group-specific autocorrelation matrix generation circuits 1222 and 1223 further receive the reception signals from the respective antennas, and therefore can also obtain autocorrelation matrices of the reception signals from the antennas.

Group-specific reception weight generation circuits 1224 and 1225 receive correlation vectors from correlation vector composition circuits 1220 and 1221, respectively, receive the autocorrelation matrices from group-specific reception weight generation circuits 1222 and 1223 and generate group-specific reception weights from these correlation vectors and autocorrelation matrices.

Reception weight multiplication circuits 1226 and 1227 multiply the signals received by reception radio circuits 1204 to 1206 by reception weights generated by group-specific reception weight generation circuits 1224 and 1225 respectively and thereby provide the reception signals with directivities.

Interference cancellers 1228 and 1229 perform interference canceller processing on the reception signals provided with directivities at the respective reception weight multiplication circuits.

By the way, the base station apparatus according to this embodiment is assumed to generate two groups using three antennas, and so two systems corresponding to the two groups are shown. Furthermore, reference numerals 1233 to 1235 denote baseband processing sections corresponding to communication terminals 1230 to 1232, respectively.

Next, the operation of the base station apparatus configured as shown above will be explained.

Here, a case where the base station apparatus carries out radio communication with communication terminals 1230 to 1232 will be explained. Signals sent from communication terminals 1230 to 1232 are received by reception radio circuits 1204 to 1206 via antennas 1201 to 1203 and subjected there to baseband signal processing. Here, the operation of the baseband signal processing on communication terminal 1230 will be explained and explanations of the baseband processing sections 1234 and 1235 for communication terminals 1231 and 1232, which are similar operations will be omitted.

First, reception signal demodulation circuit 1207 carries out processing such as despreading processing on the signals received by reception radio circuits 1204 to 1206 and demodulates the signals. This demodulated signal is sent to autocorrelation matrix generation circuit 1210 and correlation vector generation circuit 1213. Autocorrelation matrix generation circuit 1210 generates an autocorrelation matrix using the signal input from reception signal demodulation circuit 1207 as shown in expression (3) below and sends this autocorrelation matrix to individual reception weight generation circuit 1216.

Correlation vector generation circuit 1213 generates a cross-correlation vector from the reception signal input from reception signal demodulation circuit 1207 and a pilot signal, which is a known signal, as a reference signal as shown in expression (4) below and sends this cross-correlation vector to the individual reception weight generation circuit.

$$r_{xr}(1) = X(1) r*(1)$$

$$r_{xr}(m) = \beta r_{xr}(m-1) + (1-\beta) X(m) r*(m)$$

$$(m = 2, 3 \cdots) \qquad \text{Expression (3)}$$

where, $r_{xr}$: correlation vector between reception signal and reference signal, β: forgetful coefficient, X: reception signal.

$$R_{xx}(O) = \delta^{-1} 1$$

$$R_{xx}(m) = \frac{1}{\beta} R_{xx}^{-1}(m-1) - \frac{(1-\beta)R_{xx}^{-1}(m-1) \times (m) \times {}^{H}(m)R_{xx}^{-1}(m-1)}{\beta^2 + \beta(1-\beta) \times {}^{H}(m)R_{xx}^{-1}(m-1) \times (m)} \quad (m = 1, 2, ....) \qquad \text{Expression (4)}$$

where, Rxx: autocorrelation matrix, β: forgetful coefficient, X: reception signal.

Individual reception weight generation circuit 1216 generates a reception weight for communication terminal 1230 using the autocorrelation matrix and cross-correlation vector entered as shown in expression (5) below.

$$W(m) = R_{xx}^{-1}(m) r_{xr}(m) \qquad (m = 1, 2 \cdots)$$

$$\text{Expression (5)}$$

where, Rxx: autocorrelation matrix, $r_{xr}$: correlation vector between reception signal and reference signal.

Group generation circuit 1219 receives weight information of each communication terminal from individual reception weight generation circuits 1216 to 1218, estimates the direction in which the arriving signal from each communication terminal exists based on the reception weight and generates groups from this estimation result. This group generation method is the same as that in Embodiment 3. Here, suppose communication terminals 1230 and 1231 belong to group A and communication terminal 1232 belongs to group B.

The information of group A (group configuration and communication terminal) generated in this way is sent to correlation vector composition circuit 1220 and group-specific autocorrelation matrix generation circuit 1222 and the information of group B (group configuration and communication terminal) is sent to correlation vector composition circuit 1221 and group-specific autocorrelation matrix generation circuit 1223.

Correlation vector composition circuits 1220 and 1221 compose the correlation vectors for communication terminals 1230 and 1231 that belong to group A and communication terminal 1232 that belongs to group B, respectively.

The composed correlation vector generated at correlation vector composition circuit 1220 for group A is sent to group-specific reception weight generation circuit 1224, while the composed correlation vector generated at correlation vector composition circuit 1221 for group B is sent to group-specific reception weight generation circuit 1225.

Group-specific autocorrelation matrix generation circuits 1222 and 1223 each compose autocorrelation matrices obtained for communication terminals 1230 and 1231 that belong to group A and for communication terminal 1232 that belongs to group B or select an autocorrelation matrix of one communication terminal in one group and generate as a group-specific autocorrelation matrix. Furthermore, group-specific autocorrelation matrix generation circuits 1222 and 1223 have also received reception signals of the respective antennas, and therefore it is also possible to use the autocorrelation matrix of the reception signal at an antenna as a group-specific autocorrelation matrix. The group-specific autocorrelation matrix generated by group-specific autocorrelation matrix generation circuit 1222 for group A is sent to group-specific reception weight generation circuit 1224, while the group-specific autocorrelation matrix generated by group-specific autocorrelation matrix generation circuit 1223 for group B is sent to group-specific reception weight generation circuit 1225.

Group-specific reception weight generation circuits 1224 and 1225 generate group-specific reception weight values based on the composed correlation vector values and group-specific autocorrelation matrices entered as shown in expression (6) below. These group-specific reception weights are each sent to directivity multiplication circuit 1227 that generates directivities of group A and directivity multiplication circuit 1228 that generates directivities of group B.

$$W(m) = Rxx^{-1}(m) \, r \, xr(m) \quad (m = 1, \, 2 \cdots)$$

$$\cdots \text{Expression (6)}$$

where, Rxx: autocorrelation matrix, $r$ xr: composed correlation vector.

Directivity multiplication circuits 1226 and 1227 multiply the signals received by reception radio circuits 1204 to 1206 by the directivities of group A and group B, respectively and provides the respective signals with group-specific directivities. The signals with group-specific directivities assigned are sent to interference cancellers 1228 and 1229, respectively. Interference cancellers 1228 and 1229 each perform interference canceller processing on the signals with group-specific directivities assigned independently of each other.

The base station apparatus according to the embodiment above performs group generation on a plurality of communication terminals, divides the communication terminals into groups, forms reception directivities for the respective groups and applies group-specific reception directivities to all communication terminals that belong to the group. In this case, instead of forming reception directivity for every communication terminal, a reception directivity is formed for every group that contains a plurality of communication terminals, and therefore even if there are many communication terminals it is possible to perform array antenna reception for all communication terminals. Thus, it is possible to receive signals with a high SIR (Signal to Interference Ratio) for all communication terminals.

This configuration allows groups to be formed using reception weights specific to respective communication terminals and based on the information obtained from the reception weights. When transmission weights specific to the respective communication terminals are used on the downlink, this makes it possible to generate transmission weights using reception weights specific to the respective communication terminals.

Furthermore, this base station apparatus multiplies communication terminals included in each group by a same reception weight, which uniquely determines the magnitude of signal power of the communication terminals included in the group. In this way, it is possible to apply interference canceller processing to communication terminals included in this group all together. This eliminates the need to provide an interference canceller for each channel corresponding to each communication terminal and thus allows efficient interference canceller processing with reduced hardware. This makes it possible to use both interference canceller processing which is effective means when carrying out CDMA communication and array antenna processing, providing excellent interference elimination capability and increasing the number of communication terminals accommodated.

(Embodiment 5)

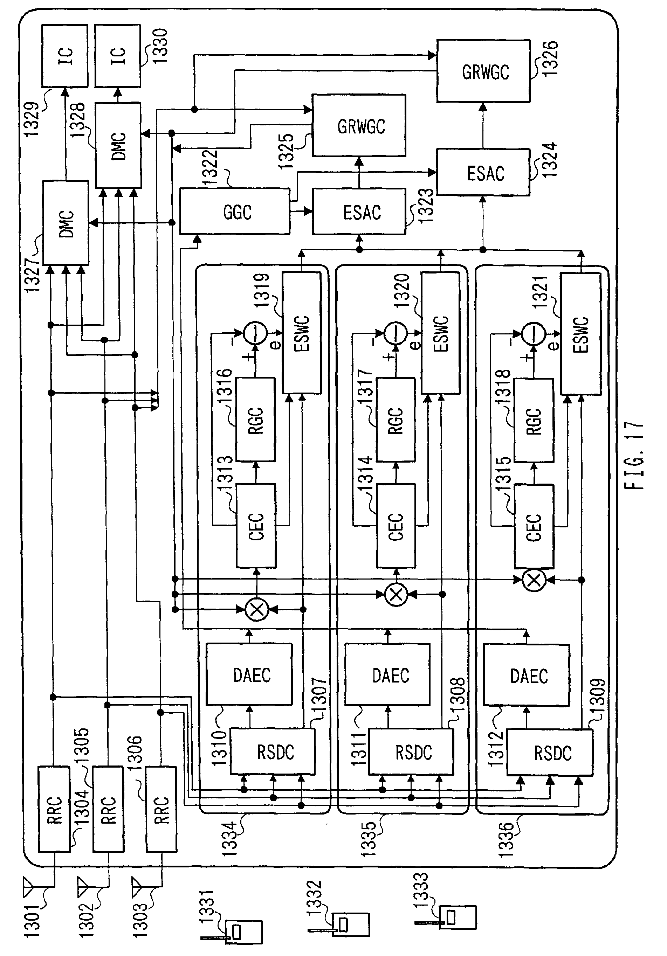

FIG.17 is a block diagram showing a configuration of a base station apparatus according to Embodiment 5 of the present invention. Here, a case where the base station apparatus carries out radio communication with communication terminals 1331 to 1333 will be explained.

Reception radio circuits 1304 to 1306 each demodulate signals received by antenna 1301 to 1303 into baseband signals, respectively. Since this embodiment explains, by way of example, a base station apparatus provided with an array antenna reception function using three antennas, there are three antennas and three reception radio circuits.

Reception signal demodulation circuits 1307 to 1309 each perform baseband processing such as CDMA demodulation on the reception signals of communication terminals 1331 to 1333. Direction of arrival estimation circuits 1310 to 1312 each carry out direction of arrival estimation on the reception signals from communication terminals 1321 to 1323. Channel estimation circuits 1313 to 1315 each perform channel estimation on the reception signals from communication terminals 1321 to 1323 using a pilot section, which is a known signal.

Replica generation circuits 1316 to 1318 each perform provisional judgment of data based on the channel estimation results input from channel estimation circuits 1310 to 1312 and creates replicas based on these provisional judgment results. Error signal weighting circuits 1319 to 1321 each receive an error signal obtained by subtracting the signals created by replica generation circuits 1316 to 1318 from signals obtained by multiplying the signals actually received by a weight, a reception signal and the channel estimation result and assigns weights to the error signals based on these.

Group generation circuit 1322 generates groups based on the position of each communication terminal estimated by direction of arrival estimation circuits 1310 to 1312. Average error signal generation circuits 1323 and 1324 average error signals weighted with the channel estimated values of the communication terminals that belong to the respective groups based on the group information generated by group generation circuit 1322.

Group-specific reception weight generation circuits 1325 and 1326 generate reception weights used for the respective groups based on the averaged error signals generated by error signal averaging circuits 1323 and 1324. Reception weight multiplication circuits 1327 and 1328 provide the reception signals with directivities by multiplying the signals received by reception radio circuits 1304 to 1306 by the reception weights generated by the group-specific reception weight generation circuits.

Interference cancellers 1329 and 1330 perform interference canceller processing on the reception signals provided with directivities at the respective reception weight multiplication circuits.

The base station apparatus according to this embodiment is assumed to generate two groups using three antennas, and so two systems corresponding to the two groups are shown. Furthermore, baseband processing sections 1334 to 1336 correspond to communication terminals 1331 to 1333, respectively.

Next, the operation of the base station apparatus configured as shown above will be explained.

Here, a case where the base station apparatus carries out radio communication with communication terminals 1331 to 1333 will be explained. Signals sent from communication terminals 1331 to 1333 are received by radio reception circuits 1304 to 1306 via antennas 1301 to 1303 and subjected there to baseband signal processing. Here, the operation of the system of the baseband processing section 1334 on communication terminal 1331 will be explained and explanations of the operations of the systems of the baseband processing sections 1335 and 1336 for communication terminals 1332 and 1333, which are similar operations will be omitted.

First, reception signal demodulation circuit 1307 carries out processing such as despreading processing on the signals received by reception radio circuits 1304 to 1306 and demodulates the signals. This demodulated signal is sent directly to direction of arrival estimation circuit 1316 and error signal weighting circuit 1319. Furthermore, this demodulated signal is multiplied by a reception weight generated by group-specific reception weight generation circuit 1325 and then sent to channel estimation circuit 1313. In this case, if no reception weight has been generated yet, a non-directivity weight value is multiplied on the demodulated signal.

Channel estimation circuit 1313 calculates an amount of phase rotation Ø of the signal actually input from a pilot signal, which is a known signal and calculates a channel estimated value. With respect to a data signal, channel estimation circuit 1313 carries out phase rotation compensation by multiplying the data signal by the channel estimated value obtained, makes a provisional decision based on the result and transfers the result to replica generation circuit 1316. Channel estimation circuit 1313 sends the channel estimation result to error signal weighting circuit 1323. Replica generation circuit 1316 generates replicas based on the provisional decision result. The replica signal generated is subtracted from the reception signal, which has been multiplied by a reception weight, and used to generate an error signal for each communication terminal. The error signal generated and the reception signal, which has not been multiplied by a reception weight, are sent to error signal weighting circuit 1319.

Error signal weighting circuit 1319 assigns a weight to the error signal entered using a channel estimated value, etc. This weighted error signal is sent to error signal averaging circuit 1323. Here, weighting may be performed or may not be performed.

The operation above is performed by the baseband signal processing circuits 1334 to 1336 independently of one another.

Group generation circuit 1322 generates groups based on the directions of arrival of signals from the respective communication terminals estimated by direction of arrival estimation circuits 1310 to 1312. This group generation will be carried out in the same way as for Embodiment 3 above. Here, group generation circuit 1322 generates group A containing communication terminals 1331 and 1332 and group B containing communication terminal 1333. Group generation circuit 1322 sends the information of this group A to error signal averaging circuit 1323 and the information of this group B to error signal averaging circuit 1324.

Error signal averaging circuits 1323 and 1324 average the weighted error signals for the communication terminals that belong to group A and group B, respectively and send the averaged error signals to group-specific reception weight generation circuits 1325 and 1326, respectively.

Group-specific reception weight generation circuits 1325 and 1326 perform adaptive signal processing using an LMS algorithm and RLS algorithm, etc. based on the averaged error signals entered, generate group-specific reception weights and send this group-specific reception weights to directivity multiplication circuit 1327 to generate directivity for group A and directivity multiplication circuit 1328 to generate directivity for group B, respectively. The processing when the LMS algorithm is used will be performed using aforementioned expression (2). Here, group-specific reception weight generation circuits 1325 and 1326 have also received reception signals from the respective antennas and these signals can also be used for adaptive signal processing.

Directivity multiplication circuits 1327 and 1328 each multiply the signals received by reception radio circuits 1304 to 1306 by directivities of group A and group B, respectively to generate signals with directivities for respective groups. The signals generated are sent to interference cancellers 1329 and 1330, respectively. Interference cancellers 1329 and 1330 each carry out interference canceller processing independently of each other.

The base station apparatus according to the embodiment above generates groups for a plurality of communication terminals, divides the communication terminals into groups, forms reception directivity for each group and applies the group-specific reception directivity to all communication terminals that belong to the group. In this case, since reception directivity is formed not for each channel corresponding to each communication terminal but for each group that contains a plurality of communication terminals, it is possible to perform array antenna reception for all communication terminals with a reduced amount of calculations even if there are many communication terminals. Thus, it is possible to receive signals with a high SIR (Signal to Interference Ratio) for all communication terminals.

This configuration makes it possible to use a reception weight specific to each communication terminal and form a group based on the information obtained from the reception weight. Thus, when a transmission weight is used for each communication terminal on the downlink, it is possible to generate a transmission weight using the direction of arrival estimation result specific to each communication terminal.

Furthermore, since this base station apparatus multiplies a same reception weight for communication terminals included in each group, the magnitude of signal power of the communication terminals included in the group is uniquely determined. This allows interference canceller processing to be carried out on the communication terminals included in this group all together. This eliminates the need to provide an interference canceller for each channel corresponding to each communication terminal and makes it possible to carry out interference canceller processing efficiently with reduced hardware. Thus, it is possible to use an interference canceller, which is effective means when CDMA communication is carried out, together with array antenna processing and increase the number of communication terminals accommodated by providing excellent interference elimination capability.

(Embodiment 6)

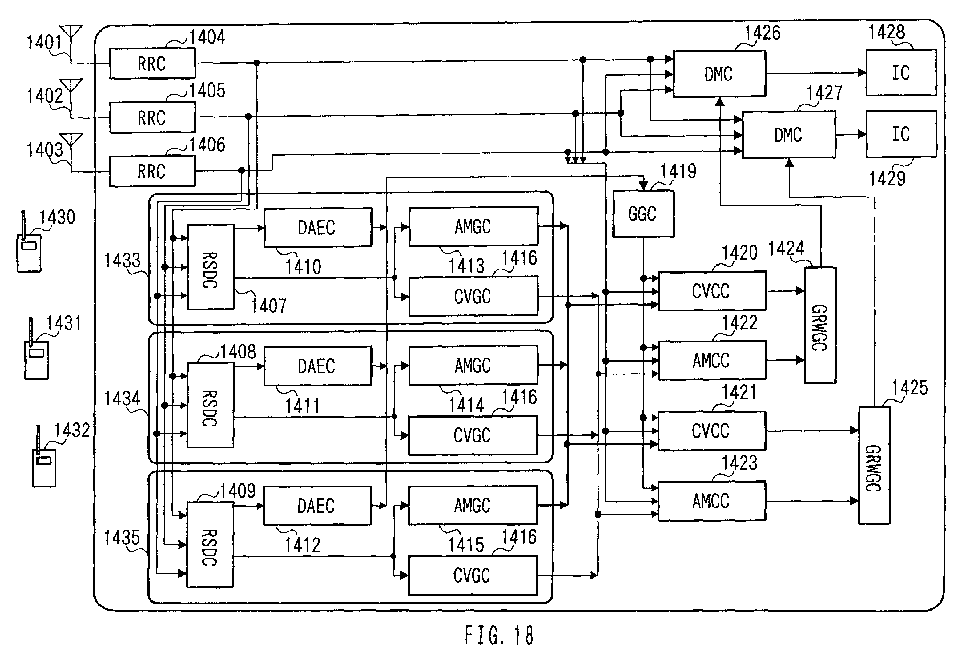

FIG.18 is a block diagram showing a configuration of a base station apparatus according to Embodiment 6 of the present invention. Here, a case where the base station apparatus carries out radio communication with communication terminals 1430 to 1432 will be explained.

Reception radio circuits 1404 to 1406 demodulate signals received by antenna 1401 to 1403 into baseband signals, respectively. Since this embodiment explains, by way of example, a base station apparatus provided with an array antenna reception function using three antennas, there are three antennas and three reception radio circuits.

Reception signal demodulation circuits 1407 to 1409 each perform baseband processing such as CDMA demodulation on the reception signals of communication terminals 1430 to 1432. Direction of arrival estimation circuits 1410 to 1412 each carry out direction of arrival estimation on the reception signals from communication terminals 1430 to 1432.

Autocorrelation matrix generation circuits 1413 to 1415 obtain autocorrelation functions from the reception signals of communication terminals 1430 to 1432 respectively. Correlation vector generation circuits 1416 to 1418 obtain cross-correlation vectors between the reception signal and a reference signal when a pilot signal is used as the reference signal from communication terminals 1430 to 1432, respectively.

Group generation circuit 1419 generates groups based on the position of each communication terminal estimated by direction of arrival estimation circuits 1410 to 1412. Correlation vector composition circuits 1420 and 1421 compose correlation vectors of the communication terminals that belong to the respective groups based on the group information generated by group generation circuit 1419.

Group-specific autocorrelation matrix generation circuits 1422 and 1423 recognize the communication terminals that belong to the respective groups based on the group information generated by group generation circuit 1419 and generate autocorrelation matrices used to generate group-specific reception weights using the autocorrelation matrices of the communication terminals that belong to the respective groups. Group-specific autocorrelation matrix generation circuits 1422 and 1423 further receive the reception signals from the respective antennas, and therefore can also obtain autocorrelation matrices using the reception signals from the antennas.

Group-specific reception weight generation circuits 1424 and 1425 receive correlation vectors from correlation vector composition circuits 1420 and 1421 receive the autocorrelation matrices from group-specific reception weight generation circuits 1422 and 1423, respectively, and generate group-specific reception weights from these correlation vectors and autocorrelation matrices.

Reception weight multiplication circuits 1426 and 1427 multiply the signals received by reception radio circuits 1404 to 1406 by reception weights generated by group-specific reception weight generation circuits 1424 and 1425, respectively and thereby provide the reception signals with directivities.

Interference cancellers 1428 and 1429 perform interference canceller processing on the reception signals provided with directivities at the respective reception weight multiplication circuits.

By the way, the base station apparatus according to this embodiment is assumed to generate two groups using three antennas, and so two systems corresponding to the two groups are shown. Furthermore, baseband processing sections 1433 to 1435 are the baseband processing sections corresponding to communication terminals 1430 to 1432, respectively.

Next, the operation of the base station apparatus configured as shown above will be explained.

Signals sent from communication terminals 1430 to 1432 are received by radio reception circuits 1404 to 1406 via antennas 1401 to 1403 and subjected there to baseband signal processing. Here, the operation of the system of baseband signal processing section 1433 on communication terminal 1430 will be explained and explanations of the operations of the systems of baseband processing sections 1434 and 1435 for communication terminals 1431 and 1432, which are similar operations, will be omitted.

First, reception signal demodulation circuit 1407 carries out processing such as despreading processing on the signals received by reception radio circuits 1404 to 1406 and demodulates the signals. This demodulated signal is sent to autocorrelation matrix generation circuit 1413 and correlation vector generation circuit 1416. Autocorrelation matrix generation circuit 1413 generates an autocorrelation matrix using the signal input from reception signal demodulation circuit 1407 as shown in aforementioned expression (4).

As shown in aforementioned expression (3) correlation vector generation circuit 1416 generates a cross-correlation vector from the reception signal input from reception signal demodulation circuit 1407 and a pilot signal, which is a known signal, as a reference signal.

Group generation circuit 1419 receives weight information of each communication terminal from direction of arrival estimation circuits 1410 to 1412, estimates the direction of arrival of the signals from each communication terminal based on the reception weight and generates groups from this estimation result. This group generation method is the same as that in Embodiment 3. Here, group A containing communication terminals 1430 and 1431 and group B containing communication terminal 1432 are generated. The information of group A generated in this way is sent to correlation vector composition circuit 1420 and group-specific autocorrelation generation circuit 1422 and the information of group B is sent to correlation vector composition circuit 1421 and group-specific autocorrelation generation circuit 1423.

Correlation vector composition circuits 1420 and 1421 compose the correlation vectors for communication terminals 1430 and 1431 that belong to group A and communication terminal 1432 that belongs to group B, respectively. The composed correlation vector generated at correlation vector composition circuit 1420 for group A is sent to group-specific reception weight generation circuit 1424, while the composed correlation vector generated at correlation vector composition circuit 1421 for group B is sent to group-specific reception weight generation circuit 1425.

Group-specific autocorrelation matrix generation circuits 1422 and 1423 each compose autocorrelation matrices obtained for communication terminals 1430 and 1431 that belong to group A and for communication terminal 1432 that belongs to group B or select an autocorrelation matrix of one communication terminal from one group and generates a group-specific autocorrelation matrix. Furthermore, group-specific autocorrelation matrix generation circuits 1422 and 1423 have also received reception signals of the respective antennas, and therefore it is also possible to use the autocorrelation matrix of a reception signal at an antenna as a group-specific autocorrelation matrix. The group-specific autocorrelation matrix generated by group-specific autocorrelation matrix generation circuit 1422 for group A is sent to group-specific reception weight generation circuit 1424, while group-specific autocorrelation matrix generated by group-specific autocorrelation matrix generation circuit 1423 for group B is sent to group-specific reception weight generation circuit 1425.

Group-specific reception weight generation circuits 1424 and 1425 generate group-specific reception weight values based on the composed correlation vector values and group-specific autocorrelation matrices entered as shown in aforementioned expression (6). These group-specific reception weight values are each sent to directivity multiplication circuit 1427 that generates directivity for group A and directivity multiplication circuit 1428 that generates directivity for group B.

Directivity multiplication circuits 1426 and 1427 multiply the signals received by reception radio circuits 1404 to 1406 by the directivities of group A and group B, respectively and provides the respective signals with group-specific directivities. The signals generated are sent to interference cancellers 1428 and 1429, respectively.

Interference cancellers 1428 and 1429 each perform interference canceller processing for the respective groups independently of each other.

The base station apparatus according to the embodiment above performs group generation on a plurality of communication terminals, divides the communication terminals into groups, forms reception directivities for the respective groups and applies group-specific reception directivity to all communication terminals that belong to the group. In this case, instead of forming reception directivity for every communication terminal, reception directivity is formed for every group that contains a plurality of communication terminals, and therefore even if there are many communication terminals it is possible to perform array antenna reception for all communication terminals with a reduced amount of calculations. Thus, it is possible to receive signals with a high SIR (Signal to Interference Ratio) for all communication terminals.

This configuration allows groups to be formed using direction of arrival estimation specific to each communication terminal and based on the information obtained from the reception weight. When directivity specific to each communication terminal should be generated on the downlink, this makes it possible to generate a transmission weight using the result of direction of arrival estimation specific to each communication terminal.

Furthermore, this base station apparatus multiplies communication terminals included in each group by a same reception weight, which uniquely determines the magnitude of signal power of the communication terminals included in the group. In this way, it is possible to apply interference canceller processing to communication terminals included in this group all together. This eliminates the need to provide an interference canceller for each channel corresponding to each communication terminal and thus allows efficient interference canceller processing with reduced hardware. This makes it possible to use the interference canceller, which are effective means when carrying out CDMA communication, together with array antenna processing, providing excellent interference elimination capability and increasing the number of communication terminals accommodated.

(Embodiment 7)

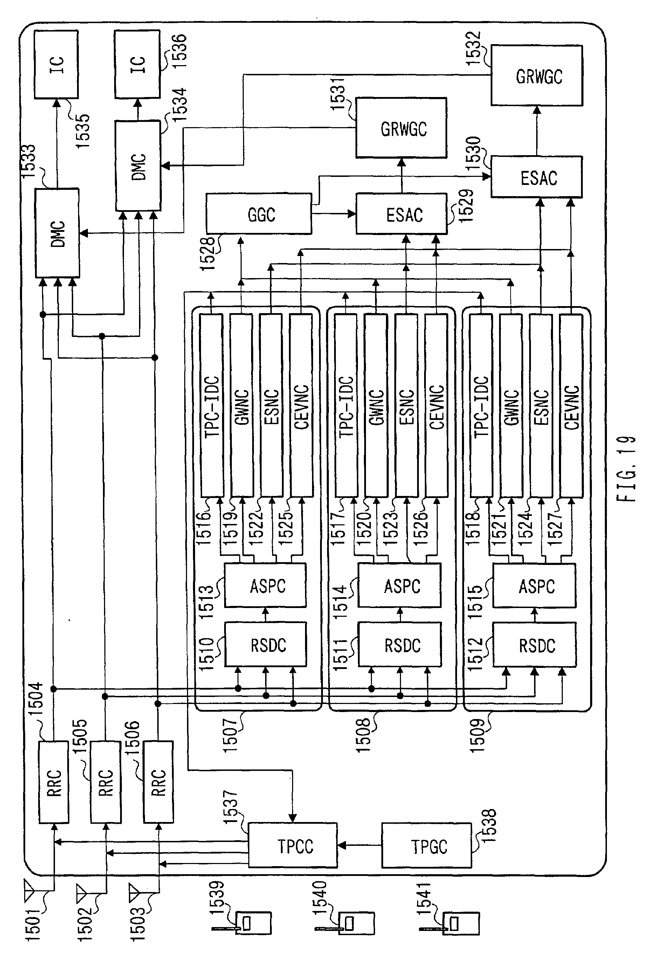

FIG.19 is a block diagram showing a configuration of a base station apparatus according to Embodiment 7 of the present invention. Here, a case where the base station apparatus carries out radio communication with communication terminals 1539 to 1541 will be explained.

Reception radio circuits 1504 to 1506 each demodulate signals received by antenna 1501 to 1503 into baseband signals, respectively. Since this embodiment explains, by way of example, a base station apparatus provided with an array antenna reception function using three antennas, there are three antennas and three reception radio circuits.

Baseband processing sections 1507 to 1509 perform baseband processing on the reception signals from communication terminals 1539 to 1541, respectively. Reception signal demodulation circuits 1510 to 1512 perform baseband processing such as CDMA demodulation on the reception signals of communication terminals 1539 to 1541, respectively.

Adaptive signal processing circuits 1513 to 1515 carry out adaptive signal processing on the signals from the communication terminals 1539 to 1541 and perform various processing such as generation of reception weights, multiplication of reception weights and information demodulation.

TPC information demodulation circuits 1516 to 1518 each receive a signal obtained by multiplying the actually received signal by a weight from adaptive signal processing circuit 1513 to 1515 and demodulate TPC information (transmit power control signal). Generated weight notification circuit 1519 to 1521 each receive the reception weight generated by adaptive signal processing circuit 1513 to 1515 and notify the group generation circuit and the error signal generation circuits of the reception weight.

Error signal notification circuits 1522 to 1524 each receive the error signal used to generate the reception weight at adaptive signal processing circuit 1513 to 1515 and notify the group generation circuit and the error signal generation circuit of the error signal. Channel estimated value notification circuits 1525 to 1527 each receive the channel estimated value used to generate the reception weight at adaptive signal processing circuit 1513 to 1515 and notify the group generation circuit and the error signal generation circuit of the channel estimated value.

Group generation circuit 1528 divides the communication terminals into a plurality of groups based on the reception weights input from generated weight notification circuits 1519 to 1521. Group-specific error signal generation circuits 1529 and 1530 each generate an error signal used to generate a group-specific reception weight using the channel estimated values of the communication terminals that belong to the respective groups input from the channel estimated value notification circuits and the error signals input from the error signal notification circuits based on the group information generated at group generation circuit 1528.

Group-specific reception weight generation circuits 1531 and 1532 generate reception weights used for the respective groups based on the averaged error signals generated by error signal averaging circuits 1529 and 1530, respectively.

Reception weight multiplication circuits 1533 and 1534 provide the reception signals with directivity by multiplying the signals received at reception radio circuits 1504 and 1506 by the reception weights generated at the group-specific reception weight generation circuits, respectively.

Interference cancellers 1535 and 1536 each carry out interference canceller processing on the reception signals provided with directivity by the respective reception weight multiplication circuits for every group. Transmit power control circuit 1537 determines transmit power based on the TPC information demodulated at TPC information demodulation circuits 1516 to 1518 Transmission signal generation circuit 1538 generates a signal to be sent to each communication terminal.

By the way, the base station apparatus according to this embodiment is assumed to generate two groups using three antennas, and so two systems corresponding to the two groups are shown.

Next, the operation of the base station apparatus configured as shown above will be explained.

Signals sent from communication terminals 1539 to 1541 are received by reception radio circuits 1510 to 1502 via antennas 1501 to 1503 and subjected there to baseband signal processing. Here, the operation of the system of the baseband processing section 1507 on communication terminal 1539 will be explained and explanations of the operations of the systems of the baseband processing sections 1508 and 1509 for communication terminals 1540 and 1541, which are similar operations will be omitted.

First, reception signal demodulation circuit 1510 carries out processing such as despreading processing on the signals received by reception radio circuits 1504 to 1506 and demodulates the signals. This demodulated signal is sent to adaptive signal processing circuit 1513.

Adaptive signal processing circuit 1513 carries out signal processing using an LMS algorithm and RLS algorithm, etc. to generate a reception weight and multiplies the received signal by this reception weight. The processing using the LMS algorithm is carried out using aforementioned expression (1). As explained in the embodiment above, adaptive signal processing circuit 1513 generates a reception weight, channel estimated value and error signal. The signal resulting from this multiplication is sent to TPC information demodulation circuit 1516, the generated reception weight is sent to generated weight notification circuit 1519, the channel estimated value used for generation of the reception weight is sent to channel estimated value notification circuit 1525 and the error signal is sent to error signal notification circuit 1522.

TPC information demodulation circuit 1516 multiplies the reception signal from adaptive signal processing circuit 1513 by a reception weight, and thereby receives the signal enabled to be received with a higher SIR and demodulates the TPC information. Here, TPC demodulation is performed because the TPC information sent from a communication terminal needs to be immediately reflected in a signal transmitted from the base station, and unlike other signals no delay is permitted in sending the TPC information to interference cancellers 1535 and 1536 to eliminate interference. Even if a configuration of demodulating a signal by multiplying reception weights specific to the respective communication terminals is adopted, no load is added from the standpoint of the structure, and therefore this embodiment uses reception signals multiplied by individual reception weights to demodulate TPC information instead of using interference cancellers. The demodulated TPC information is sent to transmit power control circuit 1537 and used for transmit power control to send the transmission signal generated at transmission signal generation circuit 1538.

The same processing above will also be carried out for other baseband processing sections 1508 and 1509.

Group generation circuit 1528 receives weight information of the respective communication terminals from generated weight notification circuits 1519 to 1521, estimates the directions of arrival of signals from the respective communication terminals, generates groups using the estimation results or generates groups based on null information generated at the respective communication terminals. The-group generation method by estimating the directions of arrival of signals from the respective communication terminals is the same as that in Embodiment 3. Here, group A including communication terminals 1539 and 1540 and group B including communication terminal 1541 are generated. The information of group A generated in this way is sent to error signal generation circuit 1529 and the information of group B is sent to error signal generation circuit 1530. The group generation method using null information puts communication terminals having similar null information into a same group.

Error signal generation circuits 1529 and 1530 receive error signals and channel estimated values corresponding to the communication terminals that exist in group A and group B, respectively, generates error signals to generate group-specific reception weights based thereupon and send these error signals to group-specific reception weight generation circuits 1531 and 1532, respectively.

Group-specific reception weight generation circuits 1531 and 1532 perform adaptive signal processing using an LMS algorithm or RLS algorithm, etc. based on the group-specific error signals entered, generate group-specific reception weights and send the reception weights to directivity multiplication circuit 1533 to generate directivity for group A and directivity multiplication circuit 1534 to generate directivity for group B, respectively . Here, in the case where the signal resulting from averaging the error signals of the respective communication terminals weighted with the channel estimated values of the respective communication terminals by all communication terminals that exist in the group is used as the error signal, processing using the LMS algorithm is performed using aforementioned expression (2).

Directivity multiplication circuits 1533 and 1534 multiply the signals received by reception radio circuits 1504 to 1506 by directivities of group A and group B, respectively and generate signals with group-specific directivities. The signals generated are each sent to interference cancellers 1535 and 1536.

Interference cancellers 1535 and 1536 each carry out interference canceller processing for each group independently of each other.

The base station apparatus forms groups for a plurality of communication terminals, divides the communication terminals into groups, forms reception directivity for each communication terminal and applies group-specific reception directivity to all communication terminals that belong to the group. Therefore, it is possible to receive signals with a high SIR (Signal to Interference Ratio) for all communication terminals.

Furthermore, this embodiment describes the case where individual reception weights are used only for transmit power control information and no interference canceller is used, but it is obvious that it is effective to apply the same processing to other information for which no demodulation delay is allowed.

The base station apparatus according to the embodiment above can demodulate transmit power control information, etc. for which no delay is allowed in demodulating information by multiplying individual reception weights and demodulate information for which some delay is allowed in demodulating information by multiplying group-specific reception weights, thus making it possible to carry out signal processing according to the nature of information.

Furthermore, since this base station apparatus multiplies a same reception weight for communication terminals included in each group, the magnitude of signal power of the communication terminals in the group is uniquely determined. For this reason, it is possible to perform interference canceller processing for communication terminals included in this group all together. This eliminates the need to provide an interference canceller for each channel corresponding to each communication terminal and allows efficient interference canceller processing with reduced hardware. Therefore, it is possible to use the interference canceller, which is effective means for carrying out CDMA communication, together with array antenna processing, provide excellent interference elimination performance and thereby increase the number of communication terminals accommodated.

(Embodiment 8)

This embodiment describes a case where a beam is formed for each group based on a group generation result.

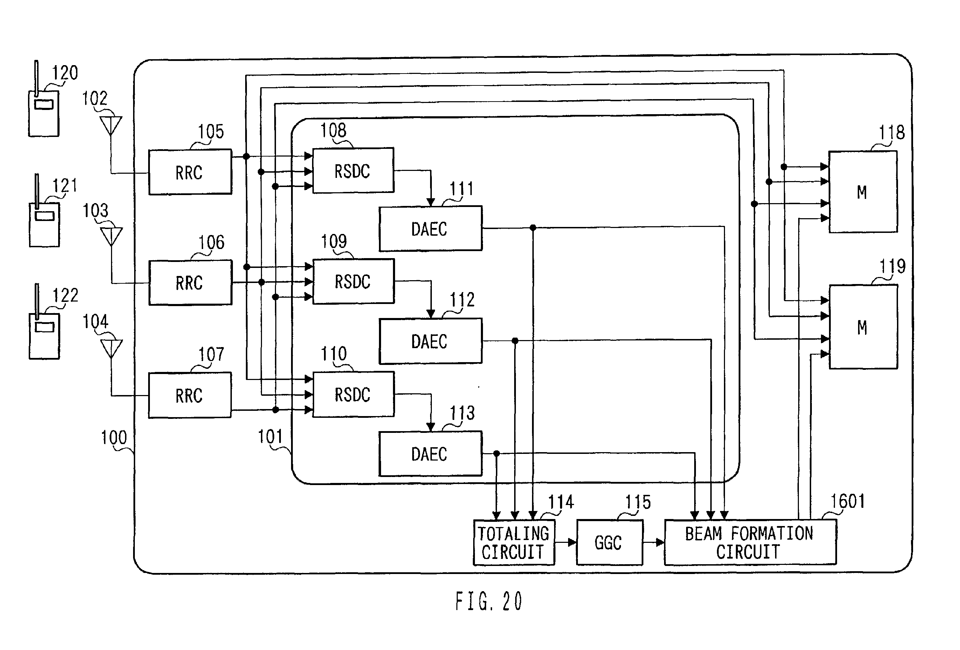

FIG.20 is a block diagram showing a configuration of a base station apparatus according to Embodiment 8 of the present invention. In FIG.20, the same parts as those in FIG.5 are assigned the same reference numerals as those in FIG.5 and detailed explanations thereof will be omitted.

The base station apparatus shown in FIG.20 is provided with beam formation circuit 1601 that receives a group generation result (e.g., angle setting range for a group and communication terminals included in the group) obtained from group generation circuit 115 and forms a beam so that the beam is directed to each group based on the group generation result.

As in the case of Embodiment 1, the base station apparatus configured as shown above estimates the direction of arrival from the reception signal and group generation circuit 115 generates groups for a plurality of channels using the direction of arrival. This group generation result is sent to beam formation circuit 1601. Beam formation circuit 1601 generates reception weights to generate a beam in such a way that directivity thereof is directed to each group generated by group generation circuit 115.

Here, as the method of generating reception weights, it is possible to apply beam-forming type processing used for a conventional array antenna to a communication terminal that enters in the center of the group. Or it is also possible to carry out beam forming on a plurality of communication terminals that exist in the group and select an optimum reception weight from the group or compose a plurality of reception weights and thereby generate an optimum reception weight for the group.

Reception weights generated by beam formation circuit 1601 are sent to multipliers 118 and 119. Multipliers 118 and 119 each multiply the reception signal by a group-specific reception weight. Thus, reception signals with group-specific reception directivities are obtained.

The base station apparatus according to the embodiment above forms groups for a plurality of communication terminals, divides the communication terminals into groups, forms reception directivity for each communication terminal and applies group-specific reception directivity to all communication terminals that belong to the group. In this case, since reception directivity is formed for every group that includes a plurality of communication terminals instead of forming reception directivity for each cannel corresponding to each communication terminal, even if there are many communication terminals, it is possible to perform array antenna reception for all communication terminals with a reduced amount of calculations. Therefore, it is possible to receive signals with a high SIR for all communication terminals. Furthermore, this configuration eliminates the need to generate reception weights using complicated adaptive signal processing such as LMS and RLS, which simplifies the hardware scale to obtain reception weights.

(Embodiment 9)

This embodiment will describe a case where a reception weight generated for each group (group weight) is used to generate a transmission weight to perform transmission using an adaptive array antenna (AAA) and perform AAA transmission with the transmission weight.

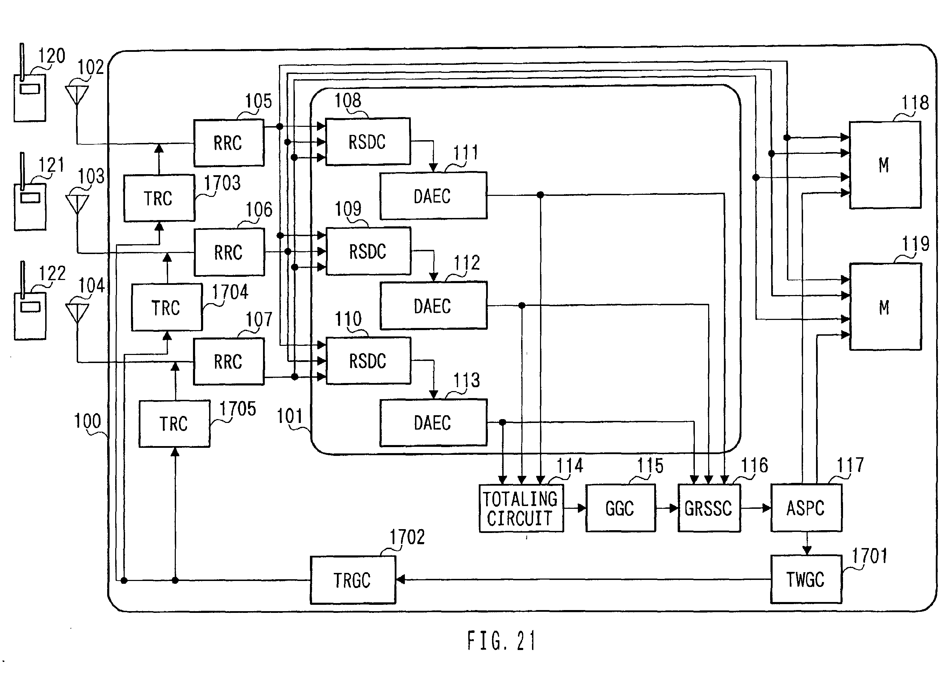

FIG.21 is a block diagram showing a configuration of a base station apparatus according to Embodiment 9 of the present invention. In FIG.21, the same parts as those in FIG.5 are assigned the same reference numerals as those in FIG.5 and detailed explanations thereof will be omitted.

The base station apparatus shown in FIG.21 is provided with transmission weight generation circuit 1701 that receives a reception weight for each group obtained from adaptive signal processing circuit 117 (group weight) and obtains a transmission weight using the group weight, transmission signal generation circuit 1702 that generates a transmission signal by multiplying the transmission data by the transmission weight obtained from transmission weight generation circuit 1701 and transmission radio circuits 1703 to 1705 that perform predetermined radio transmission processing (D/A conversion and up-conversion, etc.) on the transmission signal.

As in the case of Embodiment 1, the base station apparatus configured as shown above estimates the direction of arrival from the reception signal and group generation circuit 115 generates groups for a plurality of channels using the direction of arrival. A reception weight for each group (group weight) is calculated using this group generation result. This group weight is sent to transmission weight generation circuit 1701.

Transmission weight generation circuit 1701 obtains a transmission weight using the group weight. There are various ways to obtain a transmission weight from the group weight such as a method that uses the same reception weight generated as a group weight or a method that converts a reception weight generated as a group weight. The transmission weight obtained by transmission weight generation circuit 1701 is sent to transmission signal generation circuit 1702. Transmission signal generation circuit 1702 generates a transmission signal by multiplying digital-modulated transmission data by the transmission weight.

This transmission signal is sent to transmission radio circuits 1703 to 1705 corresponding to antennas 102 to 104 where the transmission signal is subjected to predetermined radio transmission processing (D/A conversion and up-conversion, etc.) The transmission signal subjected to this radio transmission processing is sent to communication terminals 120 to 122 via antennas 102 to 104.

The base station apparatus according to the embodiment above generates groups for a plurality of communication terminals, divides the communication terminals into groups, forms reception directivity for each group and applies group-specific reception directivity to all communication terminals that belong to the group. In this case, since reception directivity is formed for every group that includes a plurality of communication terminals instead of forming reception directivity for each cannel corresponding to each communication terminal, even if there are many communication terminals, it is possible to perform array antenna reception for all communication terminals with a reduced amount of calculations. Therefore, it is possible to receive signals with a high SIR for all communication terminals. Furthermore, this configuration eliminates the need to obtain a transmission weight for every communication terminal, thus making it possible to reduce the amount of processing.

Since transmission signals to the respective communication terminals are made orthogonal to each other on the downlink, it is possible to eliminate inter-signal interference. However, when communication is carried out using a transmission weight differing from one communication terminal to another as in the case of conventional AAA transmission, this orthogonality is destroyed. According to this configuration, a communication is carried out using a transmission weight generated for each group, and can thereby perform transmission with transmission signals made orthogonal to communication terminals that exist in the group.

In Embodiments 3 to 7 above, the interference canceller system, etc. is not limited to a particular type, but any one of single-user type, multi-user type or multi-stage type can be used.

The present invention is not limited to Embodiments 1 to 9 above, but can be implemented with various modifications. For example, the contents of Embodiments 1 to 9 above can be combined with one another as appropriate.

The base station apparatus of the present invention adopts a configuration comprising a direction of arrival estimation section that estimates the directions of arrival of signals from a plurality of communication terminals, a group generation section that generates groups including at least one communication terminal based on individual directions of arrival of signals from the plurality of communication terminals above and an array antenna processing section that forms reception directivity for each group and performs array antenna processing on all communication terminals included in the group above using this reception directivity.

This configuration generates groups for a plurality of communication terminals, divides the communication terminals into groups, forms reception directivity for each group and applies the group-specific reception directivity to all communication terminals that belong to the group. In this case, since reception directivity is formed not for each channel corresponding to each communication terminal but for each group that contains a plurality of communication terminals, it is possible to perform array antenna reception for all communication terminals with a reduced amount of calculations even if there are many communication terminals. Thus, it is possible to receive signals with a high SIR (Signal to Interference Ratio) from all communication terminals.

The base station apparatus of the present invention configured as shown above adopts a configuration with the array antenna processing section that selects one communication terminal of the communication terminals included in the group above and uses the reception directivity corresponding to the communication terminal as the reception directivity of the group above. For example, the reception directivity corresponding to the communication terminal having the highest reception level is used as the reception directivity of the group above.

This configuration makes it possible to provide the communication terminals included in the group above with a same reception directivity and receive signals from all communication terminals included in the group with a high SIR.

The base station apparatus of the present invention configured as shown above adopts a configuration with the array antenna processing section that includes a storage section to store directivity patterns and reception weights that implement the directivity patterns, and selects a reception weight corresponding to the group above from the reception weights stored in the storage section above.

This configuration makes it possible to find the reception weight most suitable for the group above from the storage section above and thereby receive signals with a high SIR for communication terminals that belong to the group above without the need to carry out signal processing, etc.

The base station apparatus of the present invention configured as shown above adopts a configuration with the array antenna processing section that forms group-specific reception directivity using an autocorrelation matrix and cross-correlation vector obtained from the reception signal.

This configuration makes it possible to generate a reception weight with an optimal directivity pattern taking into account all communication terminals that belong to the group above, perform reception from all communication terminals that belong to the group above using the reception weight above and thereby receive signals with a higher SIR.

The base station apparatus of the present invention configured as shown above adopts a configuration including an interference canceller that performs interference canceller processing on the signals subjected to array antenna processing.

According to this configuration, a same reception weight is multiplied for all communication terminals included in the group, and therefore the magnitude of signal power of the communication terminals included in the group is determined uniquely. This allows interference canceller processing to be carried out for the communication terminals included in the group all together. This eliminates the need to provide an interference canceller for each channel corresponding to each communication terminal and thereby efficiently perform interference canceller processing with reduced hardware. Thus, it is possible to use an interference canceller, which is effective means when CDMA communication is carried out, together with array antenna processing and increase the number of communication terminals accommodated by providing excellent interference elimination capability.

The base station apparatus of the present invention configured as shown above adopts a configuration including a demodulation section that demodulates transmit power control information using a signal obtained by multiplying the reception signal by a reception weight specific to each communication terminal and a transmit power control section that controls transmit power according to the demodulated transmit power control information.

This makes it possible to demonstrate an excellent reception characteristic by using not group-specific reception weights but individual reception weights for transmit power control information for which no delay is allowed and therefore which needs to be demodulated without using any interference canceller.

The base station apparatus of the present invention configured as shown above adopts a configuration comprising a transmission directivity (a directivity for transmission) generation section that obtains transmission directivity using reception directivity (a directivity for reception) formed for each group and a transmission section that transmits signals with the transmission directivity above.

This configuration eliminates the need to obtain a transmission weight for each communication terminal and can thereby reduce the amount of processing. Moreover, this configuration carries out a communication using a transmission weight generated for each group, and can thereby perform transmission with transmission signals made orthogonal to communication terminals that exist in the group.

The radio reception method of the present invention comprises a direction estimating step of estimating the directions of arrival of signals from a plurality of communication terminals, a group generating step of generating groups including at least one communication terminal based on the directions of arrival of signals from the plurality of communication terminals and an array antenna processing step of forming reception directivity for each group and carrying out array antenna processing on all communication terminals included in the group above using this reception directivity.

This method generates groups for a plurality of communication terminals, divides the communication terminals into groups, forms reception directivity for each group and applies the group-specific reception directivity to all communication terminals that belong to the group. In this case, since reception directivity is formed not for each channel corresponding to each communication terminal but for each group that contains a plurality of communication terminals, it is possible to perform array antenna reception for all communication terminals with a reduced amount of calculations even if there are many communication terminals. Thus, it is possible to receive signals with a high SIR from all communication terminals.

The radio reception method of the present invention described above comprises an interference canceller step of carrying out interference canceller processing on a signal subjected to array antenna processing.

This method multiplies communication terminals included in each group by a same reception weight, which uniquely determines the magnitude of signal power of the communication terminals included in the group. In this way, it is possible to apply interference canceller processing to communication terminals included in this group all together. This eliminates the need to provide an interference canceller for each channel corresponding to each communication terminal and thus allows efficient interference canceller processing with reduced hardware. This makes it possible to use the interference canceller, which is effective means when carrying out CDMA communication, together with array antenna processing, providing excellent interference elimination capability and thereby increasing the number of communication terminals accommodated.

The radio communication method of the present invention described above comprises a direction estimating step of estimating the directions of arrival of signals from a plurality of communication terminals, a group generating step of generating groups including at least one communication terminal based on the directions of arrival of signals from the plurality of communication terminals, an array antenna processing step of forming reception directivity for each group and carrying out array antenna processing on all communication terminals included in the group above using this reception directivity, a demodulating step of demodulating transmit power control information using a signal obtained by multiplying the reception signal by a reception weight specific to each communication terminal and a transmit power controlling step of controlling transmit power according to the demodulated transmit power control information.

For general information whose communication quality can be improved using an interference canceller, this method makes it easy to implement the interference canceller above by providing each group with reception directivity taking into account a combination with the interference canceller. In this case, since no delay caused by the implementation of the interference canceller is allowed, for transmit power control information whose communication quality cannot be improved by the interference canceller, it is possible to realize communication that allows reception with the highest SIR according to the nature of the information using a reception weight specific to each communication terminal.

The radio communication method of the present invention as described above comprises a transmission directivity generating step of obtaining transmission directivity using reception directivity formed for each group and a transmitting step of transmitting signals with the transmission directivity above.

This method eliminates the need to obtain a transmission weight for each communication terminal and can thereby reduce the amount of processing. This method also carries out a communication using a transmission weight generated for each group, and can thereby perform transmission with transmission signals made orthogonal to communication terminals that exist in the group.

As described above, during array antenna processing, the base station apparatus of the present invention divides communication terminals into several groups based on the directions of arrival of signals from the communication terminals and applies a same reception weight to all communication terminals that belong to each group. This eliminates the need to apply adaptive signal processing to a plurality of communication terminals individually and multiply reception weights, which differ from one communication terminal to another and can thereby perform array antenna processing with a reduced amount of calculations.

Moreover, the grouping described above can uniquely determine the magnitude of signals of communication terminals in a group, eliminate the need to provide an interference canceller for each channel corresponding to each communication terminal and can thereby implement interference canceller processing with a small hardware scale.

This application is based on the Japanese Patent Application No.HEI 11-327961 filed on November 18, 1999 and the Japanese Patent Application No.2000-008364 filed on January 17, 2000, entire content of which is expressly incorporated by reference herein.

Industrial Applicability

The present invention is applicable to a base station apparatus and radio reception method in a digital radio communication system.

**Claims**

1. A base station apparatus comprising:

   direction estimating means for estimating the directions of arrival of signals from a plurality of communication terminals;
   group generating means for generating groups including at least one communication terminal based on the individual directions of arrival of signals from said plurality of communication terminals; and
   array antenna processing means for forming reception directivity for each of said groups and performing array antenna processing on all communication terminals included in said group using this reception directivity.

**2.** The base station apparatus according to claim 1, wherein the array antenna processing means uses the reception directivity corresponding to the communication terminal with the highest reception level among the communication terminals included in said group as the reception directivity of said group.

**3.** The base station apparatus according to claim 1, wherein the array antenna processing means comprises storing means for storing directivity patterns and selects a directivity pattern corresponding to said group from among the directivity patterns stored in said storing means.

**4.** The base station apparatus according to claim 1, wherein the array antenna processing means forms reception directivity for every group using an autocorrelation matrix and cross-correlation vector obtained from the reception signal.

**5.** The base station apparatus according to claim 1, wherein the array antenna processing means comprises an interference canceller that performs interference canceller processing on the signals subjected to array antenna processing.

**6.** The base station apparatus according to claim 1, further comprising:

demodulating means for demodulating transmit power control information using a signal obtained by multiplying the reception signal by a reception weight specific to each communication terminal; and
transmit power controlling means for controlling transmit power according to the demodulated transmit power control information.

**7.** The base station apparatus according to claim 1, further comprising:

transmission directivity generating means for obtaining transmission directivity using reception directivity formed for each group; and
transmitting means for transmitting signals with said transmission directivity.

**8.** A radio reception method comprising:

a direction estimating step of estimating the directions of arrival of signals from a plurality of communication terminals;
a group generating step of generating groups including at least one communication terminal based on the individual directions of arrival of signals from said plurality of communication terminals; and
an array antenna processing step of forming reception directivity for each of said groups and carrying out array antenna processing on all communication terminals included in said group using this reception directivity.

**9.** The radio reception method according to claim 8, comprising an interference canceller step of carrying out interference canceller processing on the signal subjected to array antenna processing.

**10.** A radio communication method comprising:

a direction estimating step of estimating the directions of arrival of signals from a plurality of communication terminals;
a group generating step of generating groups including at least one communication terminal based on the individual directions of arrival of signals from said plurality of communication terminals;
an array antenna processing step of forming reception directivity for each of said groups and carrying out array antenna processing on all communication terminals included in said group using this reception directivity;
a demodulating step of demodulating transmit power control information using a signal obtained by multiplying the reception signal by a reception weight specific to each communication terminal; and
transmit power controlling step of controlling transmit power according to the demodulated transmit power control information.

**11.** The radio communication method according to claim 10, further comprising:

a transmission directivity generating step of obtaining transmission directivity using reception directivity formed for each group; and

a transmitting step of transmitting signals with said transmission directivity.

FIG. 1

FIG. 2

SIGNAL
POWER

| COMMUNICATION TERMINAL 1 SIGNAL | 43 |
| COMMUNICATION TERMINAL 2 SIGNAL | 42 |
| COMMUNICATION TERMINAL 3 SIGNAL | 41 |

FREQUENCY

FIG. 3

SIGNAL POWER    RECEPTION SIGNAL AT
           COMMUNICATION TERMINAL 1

51

COMMUNICATION
TERMINAL 1 SIGNAL

COMMUNICATION
TERMINAL 2 SIGNAL

COMMUNICATION
TERMINAL 3 SIGNAL

FREQUENCY

SIGNAL POWER    RECEPTION SIGNAL AT
           COMMUNICATION TERMINAL 2

52

COMMUNICATION
TERMINAL 1 SIGNAL

COMMUNICATION
TERMINAL 2 SIGNAL

COMMUNICATION
TERMINAL 3 SIGNAL

FREQUENCY

SIGNAL POWER    RECEPTION SIGNAL AT
           COMMUNICATION TERMINAL 3

53

COMMUNICATION
TERMINAL 1 SIGNAL

COMMUNICATION
TERMINAL 2 SIGNAL

COMMUNICATION
TERMINAL 3 SIGNAL

FREQUENCY

FIG. 4

FIG. 5

FIG. 6

FIG. 7

FIG. 8

FIG. 9

DIRECTIVITY
602

601

BASE
STATION

603

FIG. 10

601

BASE
STATION

604

FIG. 11

FIG. 12

EP 1 146 665 A1

FIG. 13

DIRECTIVITY OF USER 1

DIRECTIVITY OF USER 2

DIRECTIVITY OF USER 3

FIG. 14

EP 1 146 665 A1

FIG. 15

FIG. 16

EP 1 146 665 A1

FIG. 17

EP 1 146 665 A1

FIG. 18

EP 1 146 665 A1

FIG. 19

EP 1 146 665 A1

FIG. 20

FIG. 21

EP 1 146 665 A1

## INTERNATIONAL SEARCH REPORT

| International application No. |
|---|
| PCT/JP00/08036 |

| A. CLASSIFICATION OF SUBJECT MATTER |
|---|
| Int.Cl⁷ H04B 7/10, 7/08, 7/26<br>H01Q 3/26 |
| According to International Patent Classification (IPC) or to both national classification and IPC |

| B. FIELDS SEARCHED |
|---|
| Minimum documentation searched (classification system followed by classification symbols)<br>Int.Cl⁷ H01Q 3/00- 3/46, 21/00-25/04<br>H04B 7/00, 7/02-7/12, 7/24-7/26<br>H04Q 7/00- 7/38 |
| Documentation searched other than minimum documentation to the extent that such documents are included in the fields searched<br>Jitsuyo Shinan Koho 1922-1996 Toroku Jitsuyo Shinan Koho 1994-2001<br>Kokai Jitsuyo Shinan Koho 1971-2001 Jitsuyo Shinan Toroku Koho 1996-2001 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | JP, 10-126139, A (Toshiba Corporation),<br>15 May, 1998 (15.05.98)<br>& EP, 837523, A2 & US, 5936577, A1 | 1-11 |
| P,A | JP, 2000-138605, A (NEC Corporation),<br>16 May, 2000 (16.05.00),<br>& WO, 200027062 | 1-11 |
| A | JP, 10-285107, A (Radio Frequency Syst. Inc.),<br>23 October, 1998 (23.10.98)<br>& CA, 2217799, A & SE, 9800882, A<br>& GB, 2325817, A & US, 5913177, A1 | 1-11 |
| A | JP, 10-285646, A (Radio Frequency Syst. Inc.),<br>23 October, 1998 (23.10.98)<br>& CA, 2217812, A & SE, 9801028, A<br>& GB, 2325818, A | 1-11 |
| A | JP, 7-79476, A (Norhtern Telecom Ltd.),<br>20 March, 1995 (20.03.95)<br>& GB, 2281007, A & GB, 2291008, A<br>& GB, 2281009, A & GB, 2291010, A | 1-11 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>05 February, 2001 (05.02.01) | Date of mailing of the international search report<br>20 February, 2001 (20.02.01) |
|---|---|
| Name and mailing address of the ISA/<br>Japanese Patent Office | Authorized officer |
| Facsimile No. | Telephone No. |

Form PCT/ISA/210 (second sheet) (July 1992)

## INTERNATIONAL SEARCH REPORT

| International application No. |
|---|
| PCT/JP00/08036 |

C (Continuation).   DOCUMENTS CONSIDERED TO BE RELEVANT

| Category* | Citation of document, with indication, where appropriate, of the relevant passages | Relevant to claim No. |
|---|---|---|
| | & GB, 2281011, A       & GB, 2291012, A<br>& EP, 639035, A1      & GB, 2281175, A<br>& GB, 2281176, A      & EP, 647978, A2<br>& EP, 647979, A2      & EP, 647980, A2<br>& EP, 647981, A2      & EP, 647982, A2<br>& EP, 647983, A2      & US, 5565873, A1<br>& US, 5570098, A1     & US, 5576717, A1<br>& US, 5596329, A1     & US, 5602555, A1<br>& US, 5666123, A1     & US, 5714957, A1<br>& US, 5771017, A1 | |
| A | JP, 7-79475, A (Norhtern Telecom Ltd.),<br>20 March, 1995 (20.03.95)<br>& DE, 69215372, T    & EP, 593822, A1<br>& EP, 687031, A2     & AT, 145496, E<br>& US, 5603089, A1 | 1-11 |

Form PCT/ISA/210 (continuation of second sheet) (July 1992)